# EUROPEAN PATENT APPLICATION

(11) **EP 4 686 174 A1**
(43) Date of publication of application: **28.01.2026**
(21) Application number: 24777586.9
(22) Date of filing: 26.02.2024
(51) Int. Cl.: H04L 67/1095, G06F 30/20, H04W 24/08, H04W 40/24, H04W 40/02, G05B 13/04, H04W 24/02, H04W 4/02, H04L 41/40

(54) **NETWORK TWIN INSTANCE MANAGEMENT METHOD AND APPARATUS, SYSTEM, AND STORAGE MEDIUM**

(30) Priority: 28.03.2023 CN 202310354681
(71) Applicant: Huawei Technologies Co., Ltd., Shenzhen, Guangdong 518129 (CN)
(72) Inventor: YE, Shuxin, Shenzhen, Guangdong 518129 (CN); LI, Yexing, Shenzhen, Guangdong 518129 (CN); YU, Yijun, Shenzhen, Guangdong 518129 (CN)
(74) Representative: Körber, Martin Hans
(86) International application number: PCT/CN2024/078472
(87) International publication number: WO 2024/198796

(57) **Abstract**

This application discloses a network twin management method, apparatus, and system, and a storage medium. In this application, a network management service consumer entity sends first request information to a network management service provider entity, where the first request information is for requesting the network management service provider entity to create a network twin for a physical network. The network management service provider entity creates a second network twin of the physical network based on a first network twin of the physical network in response to the first request information, and sends an identifier of the second network twin to the network management service consumer entity. Creating the second network twin of the physical network improves a network twin using manner and improves execution efficiency.

## Description

This application claims priority to Chinese Patent Application No. 202310354681.0, filed with the China National Intellectual Property Administration on March 28, 2023 and entitled "NETWORK TWIN MANAGEMENT METHOD, APPARATUS, AND SYSTEM, AND STORAGE MEDIUM", which is incorporated herein by reference in its entirety.

### TECHNICAL FIELD

This application relates to the field of communication technologies, and in particular, to a network twin instance management method, apparatus, and system, and a storage medium.

### BACKGROUND

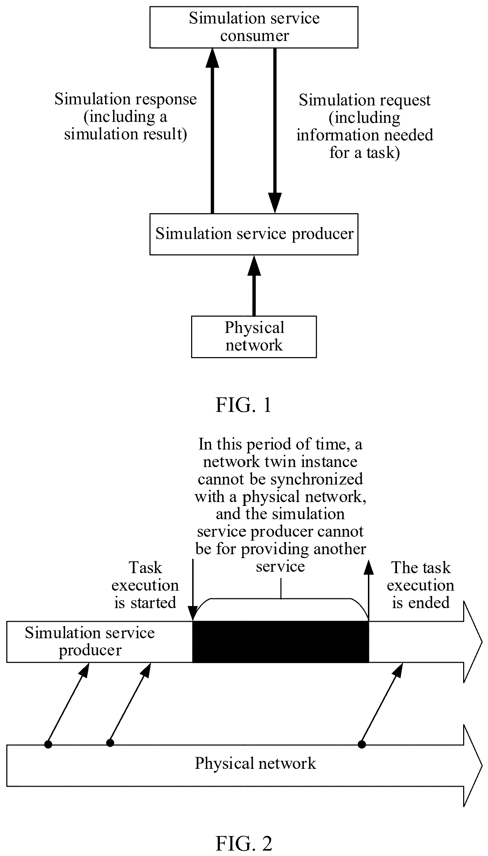

Currently, research on a network digital twin technology is still in an initial stage. FIG. 1 is a schematic flowchart of performing simulation and verification by using a network twin instance. A simulation service producer constructs the network twin instance. Assuming that a network needs to verify a group of network configuration policies, a simulation service consumer may send the policies to the simulation service producer as information needed for a task, and the simulation service producer uses the network twin instance to derive behavior that is of a physical network and that is under the given policies.

However, FIG. 2 is a diagram of existing synchronization between a simulation service producer and a physical network. When the simulation service producer does not execute a task, a network twin instance is always a mirror of the physical network. However, when the simulation service producer starts to execute a simulation and verification task, the simulation service producer cannot synchronize the network twin instance with the physical network. As a result, the network twin instance differs from the physical network, and gradually deviates from the physical network. In this case, if the simulation service producer directly continues to provide another simulation service, simulation service accuracy is affected. The simulation service producer resynchronizes the network twin instance with the physical network only after simulation is ended. However, waiting for the network twin instance to be resynchronized with the physical network before the simulation service producer provides the another service reduces efficiency.

How to improve a network twin instance using manner is a technical problem that needs to be resolved.

### SUMMARY

This application provides a network twin instance management method, apparatus, and system, and a storage medium, so that another task can be simultaneously performed without affecting synchronization between a network twin instance and a physical network.

According to a first aspect, a network twin instance management method is provided. The method includes: A network management service provider entity receives first request information from a network management service consumer entity, where the first request information is for requesting the network management service provider entity to create a network twin instance for a physical network. The network management service provider entity creates a second network twin instance of the physical network based on a first network twin instance of the physical network in response to the first request information, and sends an identifier of the second network twin instance to the network management service consumer entity.

In this aspect, creating the second network twin instance of the physical network improves a network twin instance using manner and improves execution efficiency.

In a possible implementation, the method further includes: The network management service provider entity keeps the first network twin instance synchronized with the physical network.

In this implementation, the first network twin instance is kept synchronized with the physical network, so that the second network twin instance can be kept synchronized with the physical network based on the first network twin instance in a period in which the second network twin instance is not used, and reliability of performing an operation by using the second network twin instance is improved.

In another possible implementation, the method further includes: The network management service provider entity receives second request information from the network management service consumer entity, where the second request information includes the identifier of the second network twin instance, and the second request information is for requesting the network management service provider entity to perform at least one of the following operations: pre-verifying a management policy of the physical network based on the second network twin instance, predicting performance of the physical network based on the second network twin instance, and managing a fault of the physical network based on the second network twin instance. The network management service provider entity sends an execution result to the network management service consumer entity, where the execution result is a result obtained by the network management service provider entity by performing the at least one operation.

In this implementation, creating the second network twin instance of the physical network improves the network twin instance using manner and improves the execution efficiency.

In still another possible implementation, the first request information includes at least one of the following: an update frequency, start time, and end time, where the update frequency is a time interval between two consecutive data synchronization operations, and the data synchronization operation is synchronizing data from the first network twin instance to the second network twin instance in a period in which the second network twin instance is not used; the start time is a time point at which use of the second network twin instance is started; and the end time is a time point at which the use of the second network twin instance is ended.

In this implementation, a life cycle of the second network twin instance may be controlled, to ensure that the second network twin instance is created at the expected start time and is deleted at the end time, so that a resource can be appropriately used. In addition, data may be synchronized between the second network twin instance and the first network twin instance based on the update frequency in the period in which the second network twin instance is not used, so that the second network twin instance can be synchronized with the first network twin instance in time, thereby improving reliability of the execution result.

In still another possible implementation, the first request information includes indication information indicating the network management service provider entity to create the new network twin instance for the physical network based on an existing network twin instance of the physical network.

In this implementation, the new network twin instance is created for the physical network based on the existing network twin instance of the physical network, and data does not need to be re-collected from the physical network, so that creation efficiency can be improved.

In still another possible implementation, the first request information further includes an identifier of the first network twin instance.

In this implementation, the network management service provider entity may create a plurality of first network twin instances, and each first network twin instance may be synchronized with a physical network in a different domain. Accordingly, the first request information may carry the identifier of the first network twin instance. In this case, after receiving the first request information, the network management service provider entity obtains data of the first network twin instance, and creates the second network twin instance.

In still another possible implementation, that the network management service provider entity creates the second network twin instance of the physical network based on the first network twin instance of the physical network includes: The network management service provider entity creates the second network twin instance based on data replicated from the first network twin instance.

In still another possible implementation, the first request information further includes replication requirement information, and the replication requirement information indicates the data to be replicated from the first network twin instance.

In this implementation, the network management service consumer entity is allowed to indicate the replication requirement information, so that the created second network twin instance may include only the replicated data corresponding to the replication requirement information, and a resource waste can be reduced.

In still another possible implementation, the replication requirement information includes at least one of the following: a network filter condition, environment information, traffic information, and a time point, where the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in the second network twin instance, and the time point indicates that data corresponding to a part or all of digital representations that are in the physical network and that are at the time point is required to be replicated from the first network twin instance.

In still another possible implementation, the network filter condition includes at least one of the following: a network element identifier, indicating that data corresponding to a digital representation that is in the physical network and that is of a network element identified by the network element identifier is required to be replicated from the first network twin instance; a network element type, indicating that data corresponding to digital representations that are in the physical network and that are of all network elements that belong to the network element type is required to be replicated from the first network twin instance; a networking manner, indicating that data corresponding to digital representations that are in the physical network and that are of all network elements that belong to the networking manner is required to be replicated from the first network twin instance; a base station standard, indicating that data corresponding to digital representations that are in the physical network and that are of all cells that belong to a base station whose standard is the base station standard is required to be replicated from the first network twin instance; and a network area, indicating that data corresponding to digital representations that are in the physical network and that are of all network elements in the network area is required to be replicated from the first network twin instance.

In still another possible implementation, the environment information includes at least one of the following: a geographical area and a subnet identifier, where the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

In still another possible implementation, the method further includes: The network management service provider entity receives third request information from the network management service consumer entity, where the third request information is for requesting to modify the second network twin instance, the third request information includes the identifier of the second network twin instance and a to-be-modified object, the to-be-modified object includes at least one of the following: the update frequency, the start time, the end time, and modification requirement information, and the modification requirement information indicates data of the second network twin instance required to be modified. The network management service provider entity sends third response information to the network management service consumer entity, where the third response information indicates that the network management service provider entity has modified the second network twin instance based on the third request information.

In this implementation, the second network twin instance is created in the network management service provider entity, and a capability of modifying the second network twin instance is provided for the network management service consumer entity, to allow the network management service consumer entity to modify the second network twin instance, for executing a next task. This decreases a quantity of to-be-re-created second network twin instances, reduces the resource waste, and improves the task execution efficiency.

In still another possible implementation, the method further includes: The network management service provider entity receives fourth request information from the network management service consumer entity, where the fourth request information includes the identifier of the second network twin instance, and the fourth request information is for requesting to delete the second network twin instance. The network management service provider entity sends fourth response information to the network management service consumer entity, where the third response information indicates that the network management service provider entity has deleted the second network twin instance based on the fourth request information.

In this implementation, the network management service provider entity may delete the second network twin instance based on an explicit indication of the network management service consumer entity. This facilitates appropriate use of the resource.

According to a second aspect, a network twin instance management method is provided. The method includes: A network management service consumer entity sends first request information to a network management service provider entity, where the first request information is for requesting the network management service provider entity to create a network twin instance for a physical network. The network management service consumer entity receives an identifier of a second network twin instance from the network management service provider entity.

In this aspect, the network management service provider entity is requested to create the network twin instance for the physical network, and the identifier of the second network twin instance created by the network management service provider entity is received, so that a network twin instance using manner is improved, and execution efficiency is improved.

In a possible implementation, the method further includes: The network management service consumer entity sends second request information to the network management service provider entity, where the second request information includes the identifier of the second network twin instance, and the second request information is for requesting the network management service provider entity to perform at least one of the following operations: pre-verifying a management policy of the physical network based on the second network twin instance, predicting performance of the physical network based on the second network twin instance, and managing a fault of the physical network based on the second network twin instance. The network management service consumer entity receives an execution result from the network management service provider entity, where the execution result is a result obtained by the network management service provider entity by performing the at least one operation.

In another possible implementation, the first request information includes at least one of the following: an update frequency, start time, and end time, where the update frequency is a time interval between two consecutive data synchronization operations, and the data synchronization operation is synchronizing data from a first network twin instance to the second network twin instance in a period in which the second network twin instance is not used; the start time is a time point at which use of the second network twin instance is started; and the end time is a time point at which the use of the second network twin instance is ended.

In still another possible implementation, the first request information includes indication information indicating the network management service provider entity to create the new network twin instance for the physical network based on an existing network twin instance of the physical network.

In still another possible implementation, the first request information further includes an identifier of the first network twin instance.

In still another possible implementation, the first request information further includes replication requirement information, and the replication requirement information indicates data to be replicated from the first network twin instance.

In still another possible implementation, the replication requirement information includes at least one of the following: a network filter condition, environment information, traffic information, and a time point, where the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in the second network twin instance, and the time point indicates that data corresponding to a part or all of digital representations that are in the physical network and that are at the time point is required to be replicated from the first network twin instance.

In still another possible implementation, the network filter condition includes at least one of the following: a network element identifier, indicating that data corresponding to a digital representation that is in the physical network and that is of a network element identified by the network element identifier is required to be replicated from the first network twin instance; a network element type, indicating that data corresponding to digital representations that are in the physical network and that are of all network elements that belong to the network element type is required to be replicated from the first network twin instance; a networking manner, indicating that data corresponding to digital representations that are in the physical network and that are of all network elements that belong to the networking manner is required to be replicated from the first network twin instance; a base station standard, indicating that data corresponding to digital representations that are in the physical network and that are of all cells that belong to a base station whose standard is the base station standard is required to be replicated from the first network twin instance; and a network area, indicating that data corresponding to digital representations that are in the physical network and that are of all network elements in the network area is required to be replicated from the first network twin instance.

In still another possible implementation, the environment information includes at least one of the following: a geographical area and a subnet identifier, where the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

In still another possible implementation, the method further includes: The network management service consumer entity sends third request information to the network management service provider entity, where the third request information is for requesting to modify the second network twin instance, the third request information includes the identifier of the second network twin instance and a to-be-modified object, the to-be-modified object includes at least one of the following: the update frequency, the start time, the end time, and modification requirement information, and the modification requirement information indicates data of the second network twin instance required to be modified. The network management service consumer entity receives third response information from the network management service provider entity, where the third response information indicates that the second network twin instance has been modified.

In still another possible implementation, the method further includes: The network management service consumer entity sends fourth request information to the network management service provider entity, where the fourth request information includes the identifier of the second network twin instance, and the fourth request information is for requesting to delete the second network twin instance. The network management service consumer entity receives fourth response information from the network management service provider entity, where the fourth response information indicates that the second network twin instance has been deleted.

According to a third aspect, a network twin instance management method is provided. The method includes: A network management service consumer entity sends first request information to a network management service provider entity, where the first request information is for requesting the network management service provider entity to create a network twin instance for a physical network. The network management service provider entity creates a second network twin instance of the physical network based on a first network twin instance of the physical network in response to the first request information, and sends an identifier of the second network twin instance to the network management service consumer entity.

In a possible implementation, the method further includes: The network management service provider entity keeps the first network twin instance synchronized with the physical network.

In another possible implementation, the method further includes: The network management service consumer entity sends second request information to the network management service provider entity, where the second request information includes the identifier of the second network twin instance, and the second request information is for requesting the network management service provider entity to perform at least one of the following operations: pre-verifying a management policy of the physical network based on the second network twin instance, predicting performance of the physical network based on the second network twin instance, and managing a fault of the physical network based on the second network twin instance. The network management service provider entity sends an execution result to the network management service consumer entity, where the execution result is a result obtained by the network management service provider entity by performing the at least one operation.

In still another possible implementation, the first request information includes at least one of the following information: an update frequency, start time, and end time, where the update frequency is a time interval between two consecutive data synchronization operations, and the data synchronization operation is synchronizing data from the first network twin instance to the second network twin instance in a period in which the second network twin instance is not used; the start time is a time point at which use of the second network twin instance is started; and the end time is a time point at which the use of the second network twin instance is ended.

In still another possible implementation, the first request information includes indication information indicating the network management service provider entity to create the new network twin instance for the physical network based on an existing network twin instance of the physical network.

In still another possible implementation, the first request information further includes an identifier of the first network twin instance.

In still another possible implementation, that the network management service provider entity creates the second network twin instance of the physical network based on the first network twin instance of the physical network includes: The network management service provider entity creates the second network twin instance based on data replicated from the first network twin instance.

In still another possible implementation, the first request information further includes replication requirement information, and the replication requirement information indicates the data to be replicated from the first network twin instance.

In still another possible implementation, the replication requirement information includes at least one of the following: a network filter condition, environment information, traffic information, and a time point, where the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in the second network twin instance, and the time point indicates that data corresponding to a part or all of digital representations that are in the physical network and that are at the time point is required to be replicated from the first network twin instance.

In still another possible implementation, the network filter condition includes at least one of the following: a network element identifier, indicating that data corresponding to a digital representation that is in the physical network and that is of a network element identified by the network element identifier is required to be replicated from the first network twin instance; a network element type, indicating that data corresponding to digital representations that are in the physical network and that are of all network elements that belong to the network element type is required to be replicated from the first network twin instance; a networking manner, indicating that data corresponding to digital representations that are in the physical network and that are of all network elements that belong to the networking manner is required to be replicated from the first network twin instance; a base station standard, indicating that data corresponding to digital representations that are in the physical network and that are of all cells that belong to a base station whose standard is the base station standard is required to be replicated from the first network twin instance; and a network area, indicating that data corresponding to digital representations that are in the physical network and that are of all network elements in the network area is required to be replicated from the first network twin instance.

In still another possible implementation, the environment information includes at least one of the following: a geographical area and a subnet identifier, where the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

In still another possible implementation, the network management service consumer entity sends third request information to the network management service provider entity, where the third request information is for requesting to modify the second network twin instance, the third request information includes the identifier of the second network twin instance and a to-be-modified object, the to-be-modified object includes at least one of the following: the update frequency, the start time, the end time, and modification requirement information, and the modification requirement information indicates data of the second network twin instance required to be modified. The network management service provider entity sends third response information to the network management service consumer entity, where the third response information indicates that the network management service provider entity has modified the second network twin instance based on the third request information.

In still another possible implementation, the network management service consumer entity sends fourth request information to the network management service provider entity, where the fourth request information includes the identifier of the second network twin instance, and the fourth request information is for requesting to delete the second network twin instance. The network management service provider entity sends fourth response information to the network management service consumer entity, where the fourth response information indicates that the network management service provider entity has deleted the second network twin instance based on the fourth request information.

According to a fourth aspect, a network twin instance management method is provided. The method includes: A network management service consumer entity sends first request information to a network management service provider entity, where the first request information is for requesting the network management service provider entity to perform at least one of the following operations: pre-verifying a management policy of a physical network based on a second network twin instance, predicting performance of the physical network based on the second network twin instance, and managing a fault of the physical network based on the second network twin instance. The network management service provider entity creates the second network twin instance of the physical network based on a first network twin instance of the physical network in response to the first request information, and sends an execution result to the network management service consumer entity, where the execution result is a result obtained by the network management service provider entity by performing the at least one operation.

In this aspect, when the network management service provider entity receives a request for requesting to perform the at least one operation, the network management service provider entity may create the second network twin instance of the physical network based on the first request information after receiving the first request information from the network management service consumer entity, and perform the at least one operation based on the newly created second network twin instance, to avoid affecting synchronization between the first network twin instance and the physical network or avoid affecting performing of a corresponding operation by using the first network twin instance, so that a network twin instances using manner is changed, and execution efficiency is improved.

In a possible implementation, the method further includes: The network management service provider entity keeps the first network twin instance synchronized with the physical network.

In another possible implementation, the first request information includes at least one of the following information: an update frequency, start time, and end time, where the update frequency is a time interval between two consecutive data synchronization operations, and the data synchronization operation is synchronizing data from the first network twin instance to the second network twin instance in a period in which the second network twin instance is not used; the start time is a time point at which use of the second network twin instance is started; and the end time is a time point at which the use of the second network twin instance is ended.

In still another possible implementation, that the network management service provider entity creates the second network twin instance of the physical network based on the first network twin instance of the physical network includes: The network management service provider entity creates the second network twin instance based on data replicated from the first network twin instance.

According to a fifth aspect, a network management apparatus is provided, and can implement the network twin instance management method in the first aspect. For example, the network management apparatus may be a chip or a network management service provider entity. The foregoing method may be implemented by software, hardware, or hardware executing corresponding software.

In a possible implementation, the apparatus includes: a transceiver unit and a processing unit, where the transceiver unit is configured to receive first request information from a network management service consumer entity, where the first request information is for requesting to create a network twin instance for a physical network; the processing unit is configured to create a second network twin instance of the physical network based on a first network twin instance of the physical network in response to the first request information; and the transceiver unit is further configured to send an identifier of the second network twin instance to the network management service consumer entity.

Optionally, the processing unit is further configured to keep the first network twin instance synchronized with the physical network.

Optionally, the transceiver unit is further configured to receive second request information from the network management service consumer entity, where the second request information includes the identifier of the second network twin instance, and the second request information is for requesting to perform at least one of the following operations: pre-verifying a management policy of the physical network based on the second network twin instance, predicting performance of the physical network based on the second network twin instance, and managing a fault of the physical network based on the second network twin instance. The transceiver unit is further configured to send an execution result to the network management service consumer entity, where the execution result is a result obtained by performing the at least one operation.

Optionally, the first request information includes at least one of the following: an update frequency, start time, and end time, where the update frequency is a time interval between two consecutive data synchronization operations, and the data synchronization operation is synchronizing data from the first network twin instance to the second network twin instance in a period in which the second network twin instance is not used; the start time is a time point at which use of the second network twin instance is started; and the end time is a time point at which the use of the second network twin instance is ended.

Optionally, the first request information includes indication information indicating the network management service provider entity to create the new network twin instance for the physical network based on an existing network twin instance of the physical network.

Optionally, the first request information further includes an identifier of the first network twin instance.

Optionally, that the network management service provider entity creates the second network twin instance of the physical network based on the first network twin instance of the physical network includes: The network management service provider entity creates the second network twin instance based on data replicated from the first network twin instance.

Optionally, the first request information further includes replication requirement information, and the replication requirement information indicates the data to be replicated from the first network twin instance.

Optionally, the replication requirement information includes at least one of the following: a network filter condition, environment information, traffic information, and a time point, where the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in the second network twin instance, and the time point indicates that data corresponding to a part or all of digital representations that are in the physical network and that are at the time point is required to be replicated from the first network twin instance.

Optionally, the network filter condition includes at least one of the following: a network element identifier, indicating that data corresponding to a digital representation that is in the physical network and that is of a network element identified by the network element identifier is required to be replicated from the first network twin instance; a network element type, indicating that data corresponding to digital representations that are in the physical network and that are of all network elements that belong to the network element type is required to be replicated from the first network twin instance; a networking manner, indicating that data corresponding to digital representations that are in the physical network and that are of all network elements that belong to the networking manner is required to be replicated from the first network twin instance; a base station standard, indicating that data corresponding to digital representations that are in the physical network and that are of all cells that belong to a base station whose standard is the base station standard is required to be replicated from the first network twin instance; and a network area, indicating that data corresponding to digital representations that are in the physical network and that are of all network elements in the network area is required to be replicated from the first network twin instance.

Optionally, the environment information includes at least one of the following: a geographical area and a subnet identifier, where the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

Optionally, the transceiver unit is further configured to receive third request information from the network management service consumer entity, where the third request information is for requesting to modify the second network twin instance, the third request information includes the identifier of the second network twin instance and a to-be-modified object, the to-be-modified object includes at least one of the following: the update frequency, the start time, the end time, and modification requirement information, and the modification requirement information indicates data of the second network twin instance required to be modified. The transceiver unit is further configured to send third response information to the network management service consumer entity, where the third response information indicates that the second network twin instance has been modified based on the third request information.

Optionally, the transceiver unit is further configured to receive fourth request information from the network management service consumer entity, where the fourth request information includes the identifier of the second network twin instance, and the fourth request information is for requesting to delete the second network twin instance. The transceiver unit is further configured to send fourth response information to the network management service consumer entity, where the third response information indicates that the second network twin instance has been deleted based on the fourth request information.

According to a sixth aspect, a network management apparatus is provided, and can implement the network twin instance management method in the second aspect. For example, the network management apparatus may be a chip or a network management service consumer entity. The foregoing method may be implemented by software, hardware, or hardware executing corresponding software.

In a possible implementation, the apparatus includes a transceiver unit and a processing unit, where the transceiver unit is configured to send first request information to a network management service provider entity, where the first request information is for requesting the network management service provider entity to create a network twin instance for a physical network. The transceiver unit is further configured to receive an identifier of a second network twin instance from the network management service provider entity.

Optionally, the transceiver unit is further configured to send second request information to the network management service provider entity, where the second request information includes the identifier of the second network twin instance, and the second request information is for requesting the network management service provider entity to perform at least one of the following operations: pre-verifying a management policy of the physical network based on the second network twin instance, predicting performance of the physical network based on the second network twin instance, and managing a fault of the physical network based on the second network twin instance. The transceiver unit is further configured to receive an execution result from the network management service provider entity, where the execution result is a result obtained by the network management service provider entity by performing the at least one operation.

Optionally, the first request information includes at least one of the following: an update frequency, start time, and end time, where the update frequency is a time interval between two consecutive data synchronization operations, and the data synchronization operation is synchronizing data from a first network twin instance to the second network twin instance in a period in which the second network twin instance is not used; the start time is a time point at which use of the second network twin instance is started; and the end time is a time point at which the use of the second network twin instance is ended.

Optionally, the first request information includes indication information indicating the network management service provider entity to create the new network twin instance for the physical network based on an existing network twin instance of the physical network.

Optionally, the first request information further includes an identifier of the first network twin instance.

Optionally, the first request information further includes replication requirement information, and the replication requirement information indicates data to be replicated from the first network twin instance.

Optionally, the replication requirement information includes at least one of the following: a network filter condition, environment information, traffic information, and a time point, where the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in the second network twin instance, and the time point indicates that data corresponding to a part or all of digital representations that are in the physical network and that are at the time point is required to be replicated from the first network twin instance.

Optionally, the network filter condition includes at least one of the following: a network element identifier, indicating that data corresponding to a digital representation that is in the physical network and that is of a network element identified by the network element identifier is required to be replicated from the first network twin instance; a network element type, indicating that data corresponding to digital representations that are in the physical network and that are of all network elements that belong to the network element type is required to be replicated from the first network twin instance; a networking manner, indicating that data corresponding to digital representations that are in the physical network and that are of all network elements that belong to the networking manner is required to be replicated from the first network twin instance; a base station standard, indicating that data corresponding to digital representations that are in the physical network and that are of all cells that belong to a base station whose standard is the base station standard is required to be replicated from the first network twin instance; and a network area, indicating that data corresponding to digital representations that are in the physical network and that are of all network elements in the network area is required to be replicated from the first network twin instance.

Optionally, the environment information includes at least one of the following: a geographical area and a subnet identifier, where the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

Optionally, the transceiver unit is further configured to send third request information to the network management service provider entity, where the third request information is for requesting to modify the second network twin instance, the third request information includes the identifier of the second network twin instance and a to-be-modified object, the to-be-modified object includes at least one of the following: the update frequency, the start time, the end time, and modification requirement information, and the modification requirement information indicates data of the second network twin instance required to be modified. The transceiver unit is further configured to receive third response information from the network management service provider entity, where the third response information indicates that the second network twin instance has been modified.

Optionally, the transceiver unit is further configured to send fourth request information to the network management service provider entity, where the fourth request information includes the identifier of the second network twin instance, and the fourth request information is for requesting to delete the second network twin instance. The transceiver unit is further configured to receive fourth response information from the network management service provider entity, where the fourth response information indicates that the second network twin instance has been deleted.

With reference to the fifth aspect, the sixth aspect, or either of the fifth aspect and the sixth aspect, in still another possible implementation, the network management apparatus in the fifth aspect, the sixth aspect, or either of the fifth aspect and the sixth aspect includes a processor coupled to a memory. The processor is configured to support the apparatus in performing a corresponding function in the foregoing network twin instance management method. The memory is configured to be coupled to the processor, and stores a program (instructions) and/or data necessary for the apparatus. Optionally, the network management apparatus may further include a communication interface, configured to support the apparatus in communicating with another network element. Optionally, the memory may be located inside the network management apparatus, or may be located outside the network management apparatus.

With reference to the fifth aspect, the sixth aspect, or either of the fifth aspect and the sixth aspect, in still another possible implementation, the network management apparatus in the fifth aspect, the sixth aspect, or either of the fifth aspect and the sixth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from an apparatus other than the network management apparatus and transmit the signal to the processor, or send a signal from the processor to an apparatus other than the network management apparatus. When the network management apparatus is a chip, the transceiver apparatus is the transceiver circuit or the input/output interface.

When the network management apparatus in the fifth aspect, the sixth aspect, or either of the fifth aspect and the sixth aspect is a chip or a chip module, a sending unit may be an output unit, for example, an output circuit or a communication interface; and a receiving unit may be an input unit, for example, an input circuit or a communication interface. When the network management apparatus is a terminal or an access network device, a sending unit may be a transmitter or a transmitter machine, and a receiving unit may be a receiver or a receiver machine.

According to a seventh aspect, a network twin instance management system is provided, and includes the network twin instance management apparatus according to any one of the fifth aspect or the implementations of the fifth aspect and the network twin instance management apparatus according to any one of the sixth aspect or the implementations of the sixth aspect.

According to an eighth aspect, a computer-readable storage medium is provided. The computer-readable storage medium stores a computer program or instructions. When a computer executes the computer program or the instructions, the methods in the foregoing aspects are implemented.

According to a ninth aspect, a computer program product including instructions is provided. When the instructions are run on a network management apparatus, the network management apparatus is enabled to perform the methods in the foregoing aspects.

### BRIEF DESCRIPTION OF DRAWINGS

FIG. 1 is a schematic flowchart of performing simulation and verification by using a network twin instance;
FIG. 2 is a diagram of existing synchronization between a simulation service producer and a physical network;
FIG. 3 is a diagram of a structure of a network management system according to an embodiment of this application;
FIG. 4 is a schematic flowchart of a network twin instance management method according to an embodiment of this application;
FIG. 5 is a diagram of creating a second network twin instance according to an embodiment of this application;
FIG. 6 is a schematic flowchart of another network twin instance management method according to an embodiment of this application;
FIG. 7 is a schematic flowchart of still another network twin instance management method according to an embodiment of this application;
FIG. 8 is a schematic flowchart of still another network twin instance management method according to an embodiment of this application;
FIG. 9 is a schematic flowchart of still another network twin instance management method according to an embodiment of this application;
FIG. 10 is a diagram of a structure of a network management apparatus according to an embodiment of this application; and
FIG. 11 is a diagram of a structure of another network management apparatus according to an embodiment of this application.

### DESCRIPTION OF EMBODIMENTS

To make objectives, technical solutions, and advantages of this disclosure clearer, the following further describes this disclosure in detail with reference to accompanying drawings.

"At least one" in this disclosure below indicates one or more. "A plurality of" means two or more than two. "And/or" describes an association relationship between associated objects, and represents that three relationships may exist. For example, A and/or B may represent the following three cases: Only A exists, both A and B exist, and only B exists. The character "/" generally indicates an "or" relationship between the associated objects. In addition, it should be understood that although terms "first", "second", and the like may be used in this disclosure to describe objects, these objects should not be limited to these terms. These terms are merely for distinguishing the objects from each other.

Terms "include" and "have" and any variant thereof mentioned in descriptions of this disclosure below are intended to cover non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in this disclosure, a term like "example" or "for example" is for representing giving an example, an illustration, or a description. Any method or design solution described as "example" or "for example" in this disclosure should not be explained as being more preferred or having more advantages than another method or design solution. Exactly, use of the term like "example" or "for example" is intended to present a related concept in a specific manner.

The following describes implementations of this application by using specific embodiments. Persons skilled in the art may understand other advantages and effects of this application based on content disclosed in this specification. Although descriptions of this application are provided with reference to example embodiments, this does not mean that features of this application are limited to this implementation. On the contrary, a purpose of describing this application with reference to the implementation is to cover another option or modification that may be derived based on the claims of this application. To enhance in-depth understanding of this application, the following descriptions include a plurality of specific details. This application may alternatively be implemented without using these details. In addition, to avoid confusion or blurring a focus of this application, some specific details are omitted from the descriptions. It should be noted that embodiments of this application and the features in embodiments may be mutually combined in a case of no conflict.

If used, the following terms "first", "second", and the like are merely for a purpose of description, and cannot be understood as an indication or an implication of relative importance or an implicit indication of a quantity of indicated technical features. Therefore, a feature limited by "first", "second", and the like may explicitly or implicitly include one or more features. In the descriptions of this application, unless otherwise stated, "a plurality of" means two or more than two.

The following describes several concepts that may be used in embodiments of this application.

### (1) Network twin instance (instance):

Currently, a concept of the network twin instance is proposed, and means that a digital mirror of a physical network (physical network) is established in a digitalized manner, and the physical network is digitalized by using historical network data, real-time network data, and an algorithm model of the physical network, to implement synchronous analysis, prediction, improvement, and optimization of the physical network. That is, the network twin instance includes a digital representation of the physical network, and is for simulating the physical network. The digital expression includes the algorithm model, data, and the like. A network digital twin instance, the algorithm model, the data, and the like are collectively referred to as resources (resources). The network twin instance may also be referred to as the network digital twin instance or a network digital twin entity. This is not limited in this application. The physical network is a network formed by connecting various physical devices or network elements (for example, a host, a router, and a switch) and a medium (an optical cable, a cable, a twisted pair, or the like) in a network. The physical network may be a mobile access network, a transport network, a mobile core network, a backbone network, or the like. The physical network may alternatively be a data center network, a campus network, an industrial internet of things, or the like. Network data may also be referred to as network running data, indicates a running status of the physical network, and may be configuration parameters, alarm data, performance data, and the like of the physical devices or the network elements.

To better simulate and test a plurality of scenarios in the physical network, a network management service provider entity needs to update the network twin instance based on the running status of the physical network. More frequent interaction between the network management service provider entity and the physical network indicates more timely data collection and a more accurate simulation and prediction effect. Therefore, a strict requirement is proposed on accuracy, timeliness, and interactivity of a network data collection and feedback process of the physical network.

With reduction of costs of data storage, computing, and transmission and continuous improvement of a data processing capability, the network twin instance gradually gains visibility, and is used in many fields.

Facing continuously increasing service types, a continuously expanding scale, and continuously escalating complexity, a communication network also needs to use a digital twin technology to seek a better solution transcending the physical network. A network digital twin is application of the digital twin technology to the communication network field, and aims to develop various network applications and implement efficient data-driven network management and maintenance.

The network twin instance may be for simulation and verification. In the simulation and verification, the network twin instance functions as a secure sandbox, to securely verify impact of a delivered specific configuration on the network, for example, verify impact of a delivered network element energy saving policy on the network.

Currently, research on the network digital twin is still in an initial stage. Currently, a network twin instance shown in FIG. 1 is primarily used to resolve a simulation and verification problem. However, research on application of the digital twin to the network is gradually being carried out, to help implement simpler, more automatic, resilient, and full-service life-cycle network operation and maintenance.

### (2) First network twin instance and second network twin instance

In this application, the second network twin instance may be considered as a branch (branch), a replica, a backup, or the like of the first network twin instance. Accordingly, the first network twin instance may also be referred to as a primary branch, a source, or the like.

In an example, the first network twin instance may be synchronized with the physical network in real time. In a period in which the second network twin instance is not used, data is synchronized from the first network twin instance to the second network twin instance based on an update frequency. Therefore, the second network twin instance is also synchronized with the physical network as much as possible, so that reliability of performing an operation based on the second network twin instance can be improved.

In another example, the first network twin instance may alternatively be a branch of a network twin instance (for example, a third network twin instance). That is, the second network twin instance is the branch of the branch of the third network twin instance. Data may be synchronized between the second network twin instance and the first network twin instance or the third twin instance.

In view of this, this application provides a network twin instance management solution. A network management service consumer entity requests a network management service provider entity to create a network twin instance for a physical network, and receives an identifier of a second network twin instance created by the network management service provider entity, so that a network twin instance using manner is improved, and execution efficiency is improved.

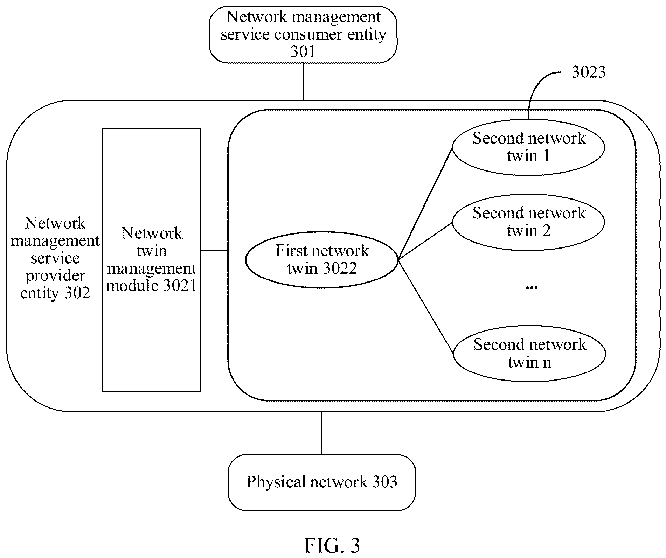

FIG. 3 is a diagram of a structure of a network management system according to an embodiment of this application. The network management system includes a network management service consumer entity 301, a network management service provider entity 302, and a physical network 303. The network management service provider entity 302 includes a network twin instance management module 3021, a first network twin instance 3022, and at least one second network twin instance 3023 (second network twin instances 1 to n are shown in the figure as an example). The network twin instance management module 3021 is responsible for implementing a network twin instance management function, and is configured to manage and control the first network twin instance 3022 and the second network twin instance 3023, for example, manage life cycles of the first network twin instance 3022 and the second network twin instance 3023. Specifically, the network twin instance management module 3021 is configured to control the first network twin instance 3022 to obtain data from the physical network 303 in real time, to implement synchronization with the physical network 303; and the network twin instance management module 3021 is further configured to create the second network twin instance 3023 of the physical network based on the first network twin instance 3022 of the physical network, and manage the second network twin instance 3023.

The network management service consumer entity 301 sends first request information to the network management service provider entity 302, where the first request information is for requesting the network management service provider entity 302 to create a network twin instance for the physical network. The network management service provider entity 302 creates the second network twin instance 3023 of the physical network based on the first network twin instance 3022 of the physical network in response to the first request information, and sends an identifier of the second network twin instance 3023 to the network management service consumer entity 301.

In a possible implementation, the method further includes: The network management service provider entity 302 keeps the first network twin instance 3022 synchronized with the physical network.

In another possible implementation, the method further includes: The network management service consumer entity 301 sends second request information to the network management service provider entity 302, where the second request information includes the identifier of the second network twin instance 3023, and the second request information is for requesting the network management service provider entity 302 to perform at least one of the following operations: pre-verifying a management policy of the physical network based on the second network twin instance 3023, predicting performance of the physical network based on the second network twin instance 3023, and managing a fault of the physical network based on the second network twin instance 3023. The network management service provider entity 302 sends an execution result to the network management service consumer entity 301, where the execution result is a result obtained by the network management service provider entity 302 by performing the at least one operation.

In still another possible implementation, the first request information includes at least one of the following information: an update frequency, start time, and end time, where the update frequency is a time interval between two consecutive data synchronization operations, and the data synchronization operation is synchronizing data from the first network twin instance 3022 to the second network twin instance 3023 in a period in which the second network twin instance 3023 is not used; the start time is a time point at which use of the second network twin instance 3023 is started; and the end time is a time point at which the use of the second network twin instance 3023 is ended.

In still another possible implementation, the first request information includes indication information indicating the network management service provider entity 302 to create the new network twin instance for the physical network based on an existing network twin instance of the physical network.

In still another possible implementation, the first request information further includes an identifier of the first network twin instance 3022.

In still another possible implementation, that the network management service provider entity 302 creates the second network twin instance 3023 of the physical network based on the first network twin instance 3022 of the physical network includes: The network management service provider entity 302 creates the second network twin instance 3023 based on data replicated from the first network twin instance 3022.

In still another possible implementation, the first request information further includes replication requirement information, and the replication requirement information indicates the data to be replicated from the first network twin instance 3022.

In still another possible implementation, the replication requirement information includes at least one of the following: a network filter condition, environment information, traffic information, and a time point, where the network filter condition indicates that data corresponding to a digital representation that is in the physical network and that is of a network element obtained through filtering based on the network filter condition is required to be replicated from the first network twin instance 3022, the environment information indicates that data corresponding to a digital representation that is in the physical network and that corresponds to the environment information is required to be replicated from the first network twin instance 3022, the traffic information indicates whether traffic information needs to be simulated in the second network twin instance 3023, and the time point indicates that data corresponding to a part or all of digital representations that are in the physical network and that are at the time point is required to be replicated from the first network twin instance 3022.

In still another possible implementation, the network filter condition includes at least one of the following: a network element identifier, indicating that data corresponding to a digital representation that is in the physical network and that is of a network element identified by the network element identifier is required to be replicated from the first network twin instance 3022; a network element type, indicating that data corresponding to digital representations that are in the physical network and that are of all network elements that belong to the network element type is required to be replicated from the first network twin instance 3022; a networking manner, indicating that data corresponding to digital representations that are in the physical network and that are of all network elements that belong to the networking manner is required to be replicated from the first network twin instance 3022; a base station standard, indicating that data corresponding to digital representations that are in the physical network and that are of all cells that belong to a base station whose standard is the base station standard is required to be replicated from the first network twin instance 3022; and a network area, indicating that data corresponding to digital representations that are in the physical network and that are of all network elements in the network area is required to be replicated from the first network twin instance 3022.

In still another possible implementation, the environment information includes at least one of the following: a geographical area and a subnet identifier, where the geographical area indicates that data corresponding to digital representations that are in the physical network and that are of all network elements in the geographical area is required to be replicated from the first network twin instance 3022, and the subnet identifier indicates that data corresponding to digital representations of all network elements in a subnet identified by the subnet identifier is required to be replicated from the first network twin instance 3022.

In still another possible implementation, the network management service consumer entity 301 sends third request information to the network management service provider entity 302, where the third request information is for requesting to modify the second network twin instance 3023, the third request information includes the identifier of the second network twin instance 3023 and a to-be-modified object, the to-be-modified object includes at least one of the following: the update frequency, the start time, the end time, and modification requirement information, and the modification requirement information indicates data of the second network twin instance 3023 required to be modified. The network management service provider entity 302 sends third response information to the network management service consumer entity 301, where the third response information indicates that the network management service provider entity 302 has modified the second network twin instance 3023 based on the third request information.

In still another possible implementation, the network management service consumer entity 301 sends fourth request information to the network management service provider entity 302, where the fourth request information includes the identifier of the second network twin instance 3023, and the fourth request information is for requesting to delete the second network twin instance 3023. The network management service provider entity 302 sends fourth response information to the network management service consumer entity 301, where the fourth response information indicates that the network management service provider entity 302 has deleted the second network twin instance 3023 based on the fourth request information.

The functions related to a network twin and performed by the network management service provider entity 302 may all be performed by the network twin instance management module 3021.

In an example, the network management service consumer entity 301 may be located in a network management system (network management system, NMS).

In another example, the network management service provider entity 302 may be located in an element management system (element management system, EMS).

Based on the foregoing network management system, the following describes in detail how to perform network twin instance management.

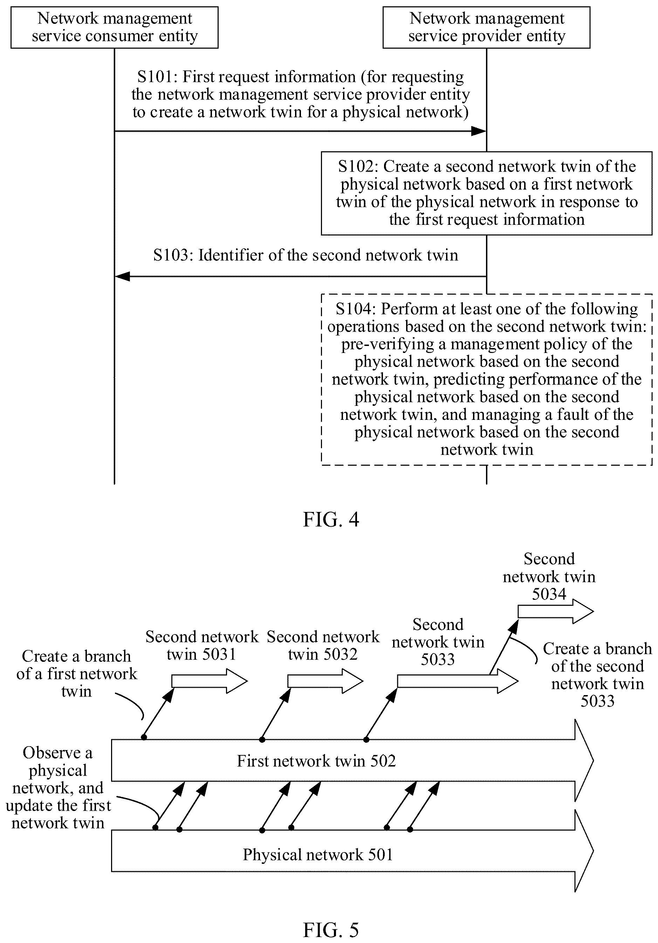

FIG. 4 is a schematic flowchart of a network twin instance management method according to an embodiment of this application. For example, the method includes the following steps.

S101: A network management service consumer entity sends first request information to a network management service provider entity.

Accordingly, the network management service provider entity receives the first request information.

The first request information is for requesting the network management service provider entity to create a network twin instance for a physical network. For example, if the network management service consumer entity needs the network management service provider entity to perform an operation based on a network twin technology, the network management service consumer entity may send the first request information to the network management service provider entity, to request the network management service provider entity to create the network twin instance for the physical network.

S102: The network management service provider entity creates a second network twin instance of the physical network based on a first network twin instance of the physical network in response to the first request information.

After receiving the first request information from the network management service consumer entity, the network management service provider entity may determine, based on a status of an internal network twin instance, whether to create the new network twin instance.

In this embodiment, it is assumed that the network management service provider entity includes the first network twin instance that has been created. The first network twin instance includes a digital representation of the physical network, and is for simulating the physical network, to implement synchronous analysis, prediction, improvement, optimization, and the like of the physical network. However, when the network management service consumer entity needs to use the network twin technology for another operation (for example, a simulation and verification requirement), the network management service provider entity may create the second network twin instance of the physical network based on the first request information after receiving the first request information from the network management service consumer entity, to avoid affecting synchronization between the first network twin instance and the physical network or avoid affecting performing of a corresponding operation by using the first network twin instance. Further, the first request information may include indication information indicating the network management service provider entity to create the new network twin instance for the physical network based on the existing network twin instance of the physical network. In this case, the network management service provider entity may create the second network twin instance of the physical network based on the first network twin instance of the physical network and the first request information.

The second network twin instance may be considered as a branch, a replica, a backup, or the like of the first network twin instance. Accordingly, the first network twin instance may also be referred to as a primary branch, a source, or the like.

In an example, the first network twin instance may be synchronized with the physical network in real time.

In another example, the first network twin instance may alternatively be a branch of a network twin instance (for example, a third network twin instance). That is, the second network twin instance is the branch of the branch of the third network twin instance.

After creating the second network twin instance of the physical network based on the first network twin instance of the physical network, the network management service provider entity obtains an identifier of the second network twin instance. The identifier of the second network twin instance may uniquely identify the network twin instance created in the network management service provider entity.

For example, that the network management service provider entity creates the second network twin instance of the physical network based on the first network twin instance of the physical network may be that the network management service provider entity creates the second network twin instance based on data replicated from the first network twin instance.

For example, that the network management service provider entity creates the second network twin instance based on the data replicated from the first network twin instance may be pulling/replicating all data (which is also referred to as digital representations) of the network twin instance from the first network twin instance, to create the second network twin instance that is completely consistent with the first network twin instance. That is, the second network twin instance includes all the data of the first network twin instance, and is a replica of the first network twin instance. Alternatively, that the network management service provider entity creates the second network twin instance based on the data replicated from the first network twin instance may be that a network twin instance management module pulls/replicates a part of data of the first network twin instance from the first network twin instance, to create the second network twin instance having a simulation environment corresponding to a simulation operation. That is, the second network twin instance includes the part of data of the first network twin instance, and is a replica of data of an operation performing environment of the first network twin instance.

Because the first network twin instance is synchronized with the physical network, the initially created second network twin instance is also synchronized with the physical network. That is, both the first network twin instance and the second network twin instance are digital representations of a same physical network, and are for simulating the same physical network.

It may be understood that the network management service provider entity may receive a plurality of pieces of first request information sent by the network management service provider entity, and create a plurality of second network twin instances; or the network management service provider entity may receive one piece of first request information sent by the network management service provider entity, and create a plurality of second network twin instances.

FIG. 5 is a diagram of creating a second network twin instance according to an embodiment of this application. The network twin instance management module observes a physical network 501, and updates a first network twin instance 502, so that the first network twin instance 502 is always synchronized with the physical network 501, to implement synchronous analysis, prediction, improvement, and optimization of the physical network 501. The network twin instance management module further creates one or more second network twin instances (a second network twin instance 5031, a second network twin instance 5032, a second network twin instance 5033, and a second network twin instance 5034 are shown in the figure as an example). The second network twin instance 5031, the second network twin instance 5032, and the second network twin instance 5033 are created based on the first network twin instance 502 of the physical network, and the second network twin instance 5034 is created based on the second network twin instance 5033 of the physical network. It can be learned that the first network twin instance is always synchronized with the physical network, another operation may be performed based on the second network twin instance, and performing of the another operation does not affect synchronization between the first network twin instance and the physical network.

Further, for example, the first request information may further include an identifier of the first network twin instance 502. In this case, one or more of the second network twin instance 5031, the second network twin instance 5032, and the second network twin instance 5033 may be created based on the first network twin instance 502.

For another example, the first request information may further include an identifier of the second network twin instance 5033. In this case, the second network twin instance 5034 may be created based on the second network twin instance 5033.

S103: The network management service provider entity sends the identifier of the second network twin instance to the network management service consumer entity.

Accordingly, the network management service consumer entity receives the identifier of the second network twin instance.

In response to the first request information, after completing creation of the second network twin instance, the network management service provider entity may send the identifier of the second network twin instance to the network management service consumer entity.

Further, the method may further include the following step (represented by a dashed line in the figure).

S104: The network management service provider entity performs at least one of the following operations based on the second network twin instance: pre-verifying a management policy of the physical network based on the second network twin instance, predicting performance of the physical network based on the second network twin instance, and managing a fault of the physical network based on the second network twin instance.

For example, after receiving the identifier of the second network twin instance, the network management service consumer entity may indicate, based on a requirement immediately or after a period of time, the network management service provider entity to perform an operation above based on the second network twin instance.

According to the network twin instance management method provided in this embodiment of this application, the network management service consumer entity requests the network management service provider entity to create the network twin instance for the physical network, and receives the identifier of the second network twin instance created by the network management service provider entity, so that a network twin instance using manner is improved, and execution efficiency is improved.

In the foregoing embodiment, it is described that the network management service provider entity creates the second network twin instance of the physical network based on the first network twin instance of the physical network based on a request of the network management service consumer entity. In the following embodiment, it is further described that a network management service consumer entity may indicate a network management service provider entity to manage a life cycle of a second network twin instance.

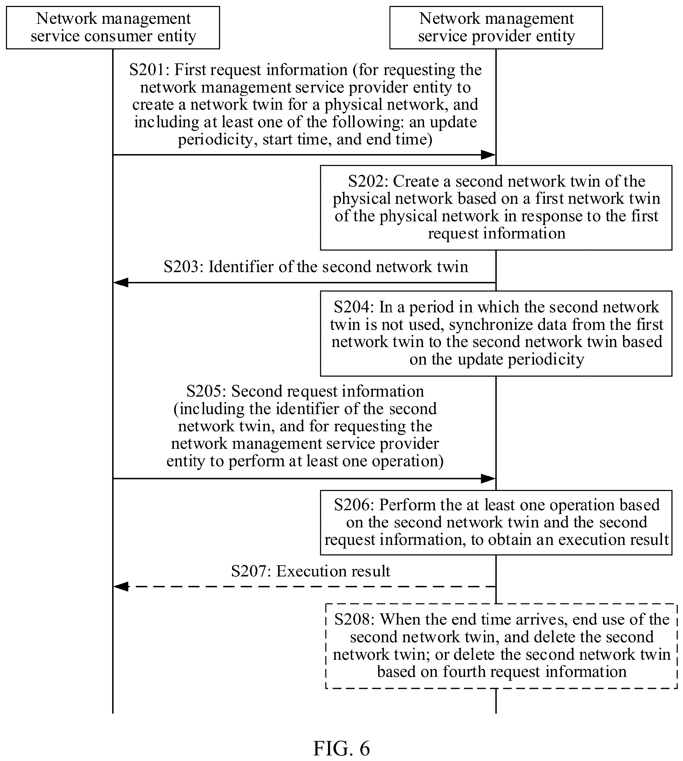

FIG. 6 is a schematic flowchart of another network twin instance management method according to an embodiment of this application. For example, the method includes the following steps.

S201: A network management service consumer entity sends first request information to a network management service provider entity.

The first request information is for requesting the network management service provider entity to create a network twin instance for a physical network.

For specific implementation of the step, refer to step S101 shown in FIG. 4.

Further, the first request information may include at least one of the following: an update frequency (frequency), start time (startTime), and end time (endTime).

The update frequency is a time interval between two consecutive data synchronization operations, a time interval between two updates, or a quantity of updates per unit time. The data synchronization operation is synchronizing data from a first network twin instance to a second network twin instance in a period in which the second network twin instance is not used. That is, in the period in which the second network twin instance is not used, the data is synchronized from the first network twin instance to the second network twin instance per update frequency, so that the second network twin instance is aligned with the first network twin instance, or the second network twin instance is consistent/synchronized with the first network twin instance.

The network management service consumer entity indicates the network management service provider entity to create the network twin instance of the physical network. After the network management service provider entity creates the second network twin instance, the network management service consumer entity may indicate the network management service provider entity to perform an operation based on the second network twin instance immediately, or may indicate to perform an operation based on the second network twin instance after a period of time. Therefore, the first request information may further include the start time. The start time indicates a time point at which use of the second network twin instance is started.

Creating the second network twin instance needs to occupy a system resource. Therefore, when the network management service consumer entity does not need to use the second network twin instance anymore, the network management service consumer entity may indicate to delete the second network twin instance, to reduce system resource overheads. Therefore, the first request information may further include the end time. The end time indicates a time point at which the use of the second network twin instance is ended.

The update frequency, the start time, and the end time are carried in the first request information, so that the network management service consumer entity can autonomously determine a synchronization periodicity of the second network twin instance and a time period for using the second network twin instance.

For example, the first request information may include any one of the update frequency, the start time, and the end time, may include any two of the update frequency, the start time, and the end time, or may include the update frequency, the start time, and the end time.

S202: After receiving the first request information, the network management service provider entity creates the second network twin instance of the physical network based on the first network twin instance of the physical network in response to the first request information.

For specific implementation of the step, refer to step S102 shown in FIG. 4.

Further, after receiving the first request information, the network management service provider entity parses the first request information, obtains the update frequency, the start time, the end time, and the like that are carried in the first request information, and creates the second network twin instance of the physical network based on the first network twin instance of the physical network before the start time based on the first request information.

For example, the network management service provider entity may start an internal timer at the start time, and duration of the timer is a difference between the end time and the start time.

In addition, in the period in which the second network twin instance is not used, for example, before the foregoing start time, and/or before the operation is completed and the use of the second network twin instance is ended, the network management service provider entity may synchronize the data from the first network twin instance to the second network twin instance based on the update frequency.

S203: The network management service provider entity sends an identifier of the second network twin instance to the network management service consumer entity.

For specific implementation of the step, refer to step S103 shown in FIG. 4.

Further, in response to the first request information, after completing creation of the second network twin instance, the network management service provider entity may further send first indication information to the network management service consumer entity, where the first indication information indicates whether the creation of the second network twin instance is successful or failed.

If the first indication information indicates that the creation of the second network twin instance is successful, the network management service provider entity sends the identifier of the second network twin instance to the network management service consumer entity. The identifier of the second network twin instance uniquely identifies the second network twin instance.

If the first indication information indicates that the creation of the second network twin instance is failed, the network management service provider entity sends a failure reason to the network management service consumer entity. The failure reason indicates returned error information. After receiving the failure reason, the network management service consumer entity may learn of the failure reason, and may take some measures to re-indicate to create the second network twin instance.

S204: In the period in which the second network twin instance is not used, the network management service provider entity synchronizes the data from the first network twin instance to the second network twin instance based on the update frequency.

In the period in which the second network twin instance is not used, for example, before the foregoing start time, and/or before the operation is completed and the use of the second network twin instance is ended, the network management service provider entity may synchronize the data from the first network twin instance to the second network twin instance based on the update frequency.

Because the first network twin instance is intensively synchronized with the physical network, synchronizing the data from the first network twin instance to the second network twin instance can enable the second network twin instance to also be synchronized with the physical network in the period in which the second network twin instance is not used, so that reliability of a simulation result can be improved.

Synchronizing the data from the first network twin instance to the second network twin instance based on the update frequency may be that the network management service provider entity pulls/replicates, from the first network twin instance, data between an end of a previous update frequency and a current update frequency, and updates data of the second network twin instance by using the pulled/replicated data.

It may be understood that an execution sequence between step S204 and the following other steps is not limited in this application. The network management service provider entity may synchronize the data from the first network twin instance to the second network twin instance based on the update frequency at any time before the second network twin instance is deleted and in the period in which the second network twin instance is not used.

S205: The network management service consumer entity sends second request information to the network management service provider entity.

After the network management service consumer entity receives the identifier of the second network twin instance, the network management service consumer entity may send the second request information to the network management service provider entity when the network management service consumer entity needs the network management service provider entity to simulate behavior of the physical network based on the second network twin instance, and requests the network management service provider entity to perform one or more operations.

When the network management service provider entity receives the second request information, the network management service provider entity may have created one or more second network twin instances. For example, the plurality of second network twin instances are respectively created based on different first network twin instances, and the different first network twin instances respectively include digital representations of physical networks in different domains, and are for simulating the physical networks in the different domains. For example, the different domains include a transport domain, an access network domain, and a core network domain. The network management service consumer entity may request to perform the operation on a second network twin instance. Therefore, the second request information may include the identifier of the second network twin instance.

The second request information is for requesting the network management service provider entity to perform at least one of the following operations: pre-verifying a management policy of the physical network based on the second network twin instance, predicting performance of the physical network based on the second network twin instance, and managing a fault of the physical network based on the second network twin instance. Further, the second request information may further include information needed for executing a task. For example, when the request information is for executing an energy saving policy verification task, the second request information may include a to-be-verified energy saving policy, and an energy saving effect of the network may be verified by executing the energy saving policy verification task.

Pre-verifying the management policy of the physical network based on the second network twin instance may be, for example, performing fact reproduction. The fact reproduction is reproduction of an event that actually has occurred in the physical network. For example, the event that actually has occurred may be reproduced in a simulation system, and causality of occurrence of the event is deduced based on an observed appearance and a system running mechanism. A simulated object may be consistent with actual existence in reality, and all related events have indeed occurred in the past.

Pre-verifying the management policy of the physical network based on the second network twin instance may alternatively be, for example, performing solution verification. The solution verification means predicting a manifestation that is of the physical network and that is obtained through reconstruction based on a solution, to assess whether an expectation is satisfied. For example, accumulated experience or a summarized rule in a past similar scenario may be migrated to a design solution, to predict whether a manifestation of the design solution satisfies an expectation, or whether a reconstruction or optimization solution is superior to an existing solution may be compared. A simulated object may not exist at all, not exist partially, or have an inconsistent configuration in reality.

Pre-verifying the management policy of the physical network based on the second network twin instance may alternatively be, for example, performing survival checking. The survival checking is checking risk tolerance of the physical network into which the fault or an extreme case is introduced. For example, by randomly assuming some faults or extreme cases, whether a system has sufficient robustness to continue to run when the faults occur may be checked. A simulated object may be consistent or inconsistent with actual existence in reality.

Predicting the performance of the physical network based on the second network twin instance may be, for example, performing future prediction. The future prediction is predicting a future change trend of the physical network. For example, a change trend of a simulated object in a period of time in the future may be provided based on a current status and a running rule of the simulated object and with reference to prediction of an input or an environment. The simulated object may be consistent with existence in reality, and a related event has not occurred.

S206: After receiving the second request information, the network management service provider entity performs the at least one operation based on the second network twin instance and the second request information, to obtain an execution result.

Because the network management service provider entity synchronizes the data from the first network twin instance to the second network twin instance based on the update frequency in the period in which the second network twin instance is not used, the second network twin instance is synchronized with the physical network before the second request information is executed. To avoid affecting synchronization between the first network twin instance and the physical network, after receiving the second request information, the network management service provider entity may perform the at least one operation based on the second network twin instance and the second request information, to obtain the execution result, without performing the at least one operation based on the first network twin instance, to avoid affecting the synchronization between the first network twin instance and the physical network.

Further, before receiving the second request information, the network management service provider entity may have created several second network twin instances. Therefore, the second request information may further include the identifier of the second network twin instance. The network management service provider entity may execute the second request information on the second network twin instance corresponding to the identifier.

Further, the method may further include the following steps (represented by dashed lines in the figure).

S207: The network management service provider entity sends the execution result to the network management service consumer entity.

After receiving the second request information, the network management service provider entity performs the at least one operation based on the second network twin instance, to obtain the execution result. Then, the network management service provider entity sends the execution result to the network management service consumer entity. The execution result is obtained by the network management service provider entity by performing the at least one operation based on the second network twin instance. For example, if the operation is pre-verifying the management policy of the physical network based on the second network twin instance, the execution result is a pre-verification result. For another example, if the operation is predicting the performance of the physical network based on the second network twin instance, the execution result is a prediction structure. For another example, if the operation is managing the fault of the physical network based on the second network twin instance, the execution result is a management result.

S208: When the end time arrives, the network management service provider entity ends the use of the second network twin instance, and deletes the second network twin instance; or deletes the second network twin instance based on fourth request information.

The network management service provider entity may end the use of the second network twin instance, and delete the second network twin instance in the following two implementations:

In an implementation, when the end time arrives, for example, when the timer stops timing, the network management service provider entity ends the use of the second network twin instance, and deletes the second network twin instance. This helps reduce the system resource overheads, so that the resource is appropriately used.

For example, the end time may be a moment at which the network management service provider entity completes execution of the second request information and sends the execution result, or may be a period of time after the network management service provider entity completes execution of the second request information and sends the execution result. The network management service consumer entity may estimate the end time based on human experience or an experimental value.

In another implementation, after completing the foregoing operation based on the second network twin instance, the network management service provider entity does not automatically delete the second network twin instance immediately, but waits to receive the fourth request information from the network management service consumer entity. The fourth request information is for requesting to delete the second network twin instance. Further, the fourth request information may include the identifier of the second network twin instance. After receiving the fourth request information, the network management service provider entity deletes, based on the fourth request information, the second network twin instance corresponding to the identifier of the second network twin instance, and may further send fourth response information to the network management service consumer entity, where the fourth response information indicates that the network management service provider entity has deleted the second network twin instance based on the fourth request information.

When this implementation is used, before the network management service consumer entity requests to delete the second network twin instance, the network management service consumer entity may further request the network management service provider entity to perform another operation, where a simulation environment required by the operation is the same as a simulation environment required by the second request information. The network management service provider entity does not need to create a new network twin instance, and may perform the operation based on the second network twin instance that has been created, thereby saving the resource and improving execution efficiency. Further, the network management service provider entity may further send an execution result of the operation to the network management service consumer entity.

Further, the network management service provider entity may further send indication information to the network management service consumer entity, where the indication information indicates whether deletion of the second network twin instance is completed. If the indication information indicates that the deletion of the second network twin instance is not completed, a failure reason may be further sent.

According to the network twin instance management method provided in this embodiment of this application, the second network twin instance is created, and may be for performing the operation, so that the synchronization between the first network twin instance and the physical network is not affected. In addition, a life cycle of the second network twin instance may be controlled, to ensure that the second network twin instance is created at the expected start time and deleted at the end time, so that the resource can be appropriately used. In addition, the data may be synchronized from the first network twin instance to the second network twin instance based on the update frequency in the period in which the second network twin instance is not used, so that the second network twin instance can be synchronized with the first network twin instance as much as possible, thereby improving reliability of the execution result.

In addition, the network management service provider entity may alternatively not automatically delete the second network twin instance before receiving the fourth request information indicating to delete the second network twin instance. If the network management service consumer entity has a new operation, and a simulation environment required by the operation is the same as a simulation environment required by a previous operation, the network management service provider entity may perform the new operation based on the second network twin instance that has been created, thereby saving the resource and improving the execution efficiency. After all operations are completed, the network management service consumer entity indicates to delete the second network twin instance. Operation flexibility is achieved.

Creating the second network twin instance of the physical network based on the first network twin instance of the physical network may be creating the second network twin instance based on all digital representations of the first network twin instance. However, only a part of digital representations of the first network twin instance may need to be used for performing many operations. Therefore, to avoid a resource waste, the following embodiment describes how to create the second network twin instance, so that the second network twin instance is created based on the part of digital representations of the first network twin instance.

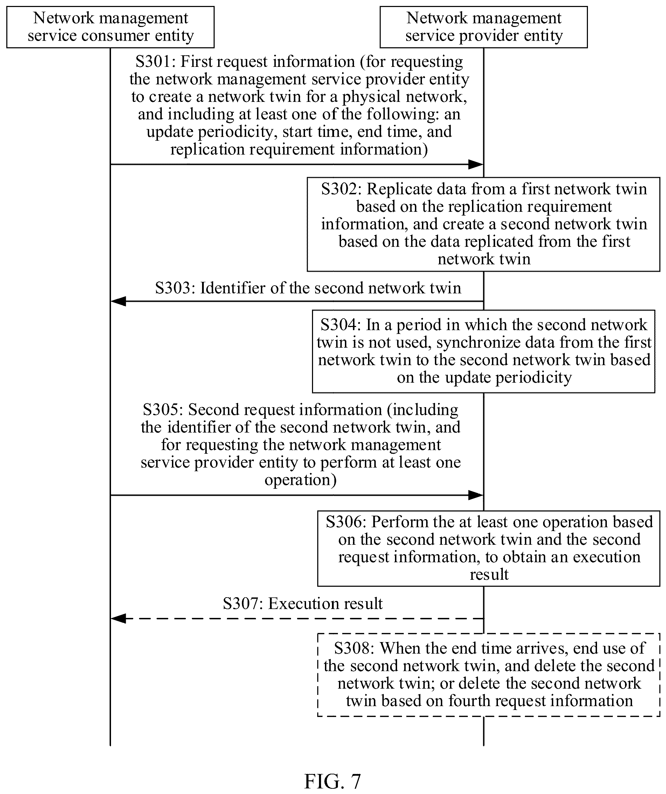

FIG. 7 is a schematic flowchart of still another network twin instance management method according to an embodiment of this application. For example, the method includes the following steps.

S301: A network management service consumer entity sends first request information to a network management service provider entity.

The first request information is for requesting to create a network twin instance for a physical network.

The first request information includes at least one of the following information: an update frequency, start time, and end time.

For specific implementation of the step, refer to step S101 in the embodiment shown in FIG. 4 or step S201 in the embodiment shown in FIG. 6.

Different from the foregoing embodiments, the first request information may further include replication requirement information. The replication requirement information indicates data to be replicated from a first network twin instance.

For example, the replication requirement information may include at least one of the following: a network filter condition, environment information, traffic information, and a time point, where the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in a second network twin instance, and the time point indicates that data corresponding to a part or all of digital representations that are in the physical network and that are at the time point is required to be replicated from the first network twin instance.

The network filter condition may include at least one of the following:
a network element identifier, indicating that data corresponding to a digital representation that is in the physical network and that is of a network element identified by the network element identifier is required to be replicated from the first network twin instance;
a network element type, indicating that data corresponding to digital representations that are in the physical network and that are of all network elements that belong to the network element type is required to be replicated from the first network twin instance;
a networking manner, indicating that data corresponding to digital representations that are in the physical network and that are of all network elements that belong to the networking manner is required to be replicated from the first network twin instance;
a base station standard, indicating that data corresponding to digital representations that are in the physical network and that are of all cells that belong to a base station whose standard is the base station standard is required to be replicated from the first network twin instance; and
a network area, indicating that data corresponding to digital representations that are in the physical network and that are of all network elements in the network area is required to be replicated from the first network twin instance.

The network element identifier may be, for example, an identifier of a network element, an identifier of a subnet, and/or an identifier of a base station. The identifier may uniquely identify the network element, the subnet, and/or the base station, or an internet protocol (internet protocol, IP) address of the network element, an internet protocol address of the subnet, and/or an internet protocol address of the base station. The network element/subnet/base station and a network topology relationship between the network element, the subnet, the base station may be obtained based on the identifier/IP address of the network element, the identifier/IP address of the subnet, and/or the identifier/IP address of the base station.

The network element type is, for example, a serving gateway (serving gateway, SGW), a public data network gateway (PDN gateway, PGW), or a user plane function (user plane function, UPF).

The networking manner is, for example, a virtual local area network (virtual local area network, VLAN) or a flat network.

The base station standard is, for example, long term evolution (long term evolution, LTE) or new radio (new radio, NR).

The network area may be, for example, a polygon area (longitude and latitude of a vertex of a polygon are given) or a subnet/a name of a specific data center.

Based on the foregoing network filter condition, it may be learned that the data corresponding to the digital representation that is in the physical network and that is of the network element obtained through filtering based on the network filter condition is required to be replicated from the first network twin instance.

The environment information includes at least one of the following: a geographical area and a subnet identifier, where the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

For example, the geographical area may be a polygon area (longitude and latitude of a vertex of a polygon are given).

Based on the given geographical area and/or subnet identifier, a range of an environment that needs to be simulated may be defined.

The traffic information indicates whether the traffic information in the network needs to be constructed/simulated in the second network twin instance. The traffic information may be indicated by one bit. For example, if a value of the bit is "1", the traffic information indicates that the traffic information in the network needs to be constructed/simulated in the second network twin instance; or if a value of the bit is "0", the traffic information indicates that the traffic information in the network does not need to be constructed/simulated in the second network twin instance.

Generally, the time point includes the following three types:
Physical world time: is time in a physical world in reality, and is unique time that exists objectively without relying on any simulation model or simulation system.
Simulation execution time: The simulation execution time is measured by using the foregoing physical world time, is physical world time consumed for running a simulation system, and may be for measuring simulation efficiency.
Simulation world time: is a concept relative to the physical world time, and is reference time for running the simulation system. The simulation world time may remain consistent with the physical world time to some degree, or may be faster or slower than the physical world time.

The running reference time herein is reference time for running the second network twin instance, and corresponds to the foregoing simulation world time. In addition, startTime and endTime above correspond to the foregoing simulation execution time.

For example, if a simulation task is "reproducing a fault that occurs at 14:00 yesterday", the running reference time is "YYYY/MM/DD 14:00", and the second network twin instance constructs an environment that is at 14:00 yesterday. In addition, startTime and endTime are the start time and the end time of the use of the second network twin instance. For example, the second network twin instance may be used from 10:00 to 11:00 today.

S302: The network management service provider entity replicates the data from the first network twin instance based on the replication requirement information, and creates the second network twin instance based on the data replicated from the first network twin instance.

After receiving the first request information, the network management service provider entity parses information that is needed for a task and that is carried in the first request information, and determines the network element/subnet/base station that needs to be created in the second network twin instance and the network topology relationship between the network element, the subnet, the base station, defines the range of the environment that needs to be simulated, or determines whether the traffic information in the network needs to be constructed/simulated in the second network twin instance, thereby obtaining data that is in the first network twin instance and that corresponds to the information needed for the task, and creating the second network twin instance based on the data corresponding to the first information needed for the task.

The second network twin instance that is created in this embodiment and that corresponds to the network twin instance may include only a part of data of the first network twin instance.

For example, if the information needed for the task includes an identifier of a network element 1 and an identifier of a network element 2, the network management service provider entity pulls/replicates data related to the network element 1 and the network element 2 from the first network twin instance, and creates the second network twin instance based on the data related to the network element 1 and the network element 2. The data that is related to the network element 1 and the network element 2 and that is stored in the first network twin instance is collected by the network management service provider entity from the physical network.

In another embodiment, the network management service provider entity may create a plurality of first network twin instances, and each first network twin instance may be synchronized with a physical network in a different domain. For example, a first network twin instance 1 is synchronized with data in a transport network (transport network, TN) domain, a first network twin instance 2 is synchronized with data in an access network (access network, AN) domain, and a first network twin instance 3 is synchronized with data in a core network (core network, CN) domain. Accordingly, the first request information may carry an identifier of the first network twin instance, to request to create a branch of the first network twin instance. In this case, after receiving the first request information, the network management service provider entity obtains data of the first network twin instance, and creates the branch of the first network twin instance. For example, the information needed for the task is an identifier of the first network twin instance 3, and the network management service consumer entity requests to create a branch of the first network twin instance 3, to perform simulation and verification in the core network domain. In this case, the network management service provider entity pulls data of the first network twin instance 3, and creates the branch of the first network twin instance 3.

S303: The network management service provider entity sends an identifier of the second network twin instance to the network management service consumer entity.

For specific implementation of the step, refer to step S203 in the embodiment shown in FIG. 6. Details are not described herein again.

S304: In a period in which the second network twin instance is not used, the network management service provider entity synchronizes data from the first network twin instance to the second network twin instance based on the update frequency.

For specific implementation of the step, refer to step S204 in the embodiment shown in FIG. 6. Details are not described herein again.

S305: The network management service consumer entity sends second request information to the network management service provider entity.

For specific implementation of the step, refer to step S205 in the embodiment shown in FIG. 6. Details are not described herein again.

S306: After receiving the second request information, the network management service provider entity performs at least one operation based on the second network twin instance and the second request information, to obtain an execution result.

For specific implementation of the step, refer to step S206 in the embodiment shown in FIG. 6. Details are not described herein again.

Further, the method may further include the following steps (represented by dashed lines in the figure).

S307: The network management service provider entity sends the execution result to the network management service consumer entity.

For specific implementation of the step, refer to step S207 in the embodiment shown in FIG. 6. Details are not described herein again.

S308: When the end time arrives, the network management service provider entity ends the use of the second network twin instance, and deletes the second network twin instance; or deletes the second network twin instance based on fourth request information.

For specific implementation of the step, refer to step S208 in the embodiment shown in FIG. 6. Details are not described herein again.

According to the network twin instance management method provided in this embodiment of this application, the network management service consumer entity includes the replication requirement information in the first request information, so that the network management service provider entity replicates, from the first network twin instance, only the data that the replication requirement information indicates to replicate, thereby reducing a resource waste and improving creation efficiency.

After the network management service provider entity completes an operation, if a next operation needs a similar but not completely the same simulation environment, and a previous second network twin instance cannot continue to be used, a new network twin instance needs to be created. As a result, a large quantity of network twin instances need to be re-created, causing a resource waste and an efficiency reduction.

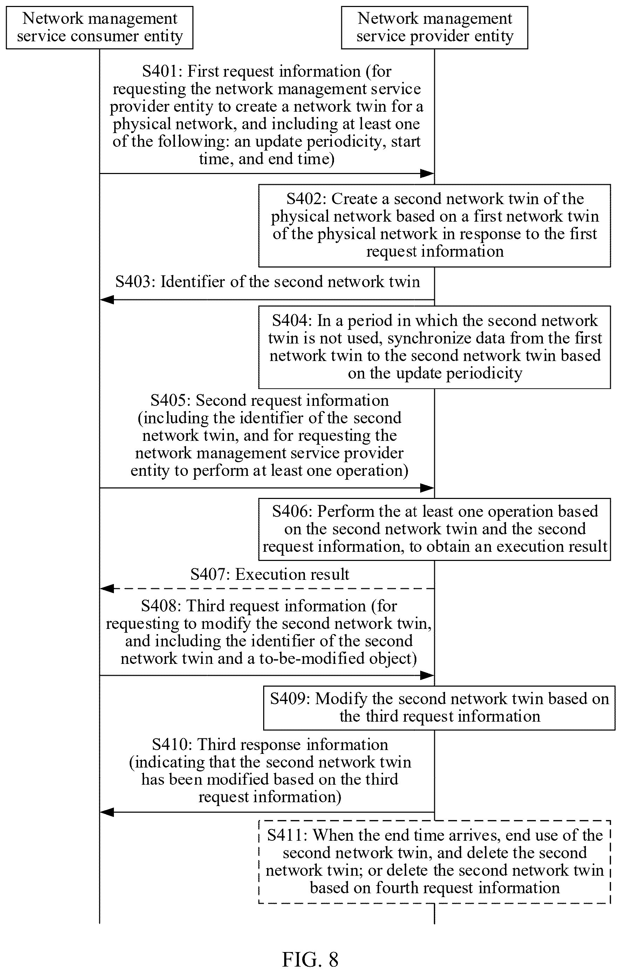

FIG. 8 is a schematic flowchart of still another network twin instance management method according to an embodiment of this application. For example, the method includes the following steps.

S401: A network management service consumer entity sends first request information to a network management service provider entity.

The first request information is for requesting to create a twin instance for a physical network.

The first request information includes at least one of the following information: an update frequency, start time, and end time.

For specific implementation of the step, refer to step S101 in the embodiment shown in FIG. 4, step S201 in the embodiment shown in FIG. 6, or step S301 in the embodiment shown in FIG. 7. Details are not described herein again.

S402: After receiving the first request information, the network management service provider entity creates a second network twin instance of the physical network based on a first network twin instance of the physical network in response to the first request information.

For specific implementation of the step, refer to step S102 in the embodiment shown in FIG. 4, step S202 in the embodiment shown in FIG. 6, or step S302 in the embodiment shown in FIG. 7. Details are not described herein again.

S403: The network management service provider entity sends an identifier of the second network twin instance to the network management service consumer entity.

For specific implementation of the step, refer to step S203 in the embodiment shown in FIG. 6 or step S303 in the embodiment shown in FIG. 7. Details are not described herein again.

S404: In a period in which the second network twin instance is not used, the network management service provider entity synchronizes data from the first network twin instance to the second network twin instance based on the update frequency.

For specific implementation of the step, refer to step S204 in the embodiment shown in FIG. 6 or step S304 in the embodiment shown in FIG. 7. Details are not described herein again.

S405: The network management service consumer entity sends second request information to the network management service provider entity.

For specific implementation of the step, refer to step S205 in the embodiment shown in FIG. 6 or step S305 in the embodiment shown in FIG. 7. Details are not described herein again.

S406: After receiving the second request information, the network management service provider entity performs at least one operation based on the second network twin instance and the second request information, to obtain an execution result.

For specific implementation of the step, refer to step S206 in the embodiment shown in FIG. 6 or step S306 in the embodiment shown in FIG. 7. Details are not described herein again.

S407: The network management service provider entity sends the execution result to the network management service consumer entity.

The step is optional, and is represented by a dashed line in the figure.

For specific implementation of the step, refer to step S207 in the embodiment shown in FIG. 6 or step S307 in the embodiment shown in FIG. 7. Details are not described herein again.

S408: The network management service consumer entity sends third request information to the network management service provider entity.

After the network management service consumer entity requests, by using the second request information, to complete a first operation, if the network management service consumer entity requests to perform a second operation, the second operation needs a simulation environment similar to but not completely the same as that of the first operation, and the network management service provider entity cannot directly perform the second operation based on the second network twin instance, the network management service consumer entity may send the third request information to the network management service provider entity, where the third request information is for requesting to modify the second network twin instance.

Currently, there may be more than one second network twin instance that has been created in the network management service provider entity. Therefore, the third request information may include the identifier of the second network twin instance, and indicates to modify the second network twin instance corresponding to the identifier of the second network twin instance.

The third request information may further include a to-be-modified object, and the to-be-modified object may include at least one of the following: the update frequency, the start time, the end time, and modification requirement information. The modification requirement information indicates data of the second network twin instance required to be modified. That is, the network management service consumer entity may request to modify one or more of the update frequency, the start time, the end time, and the data that are of the second network twin instance.

S409: The network management service provider entity modifies the second network twin instance based on the third request information.

After receiving the third request information, the network management service provider entity may modify the identifier of the second network twin instance based on the third request information. Specifically, the one or more of the update frequency, the start time, the end time, and the data that are of the second network twin instance may be modified, to obtain a second network twin instance through modification.

S410: The network management service provider entity sends third response information to the network management service consumer entity.

After modifying the second network twin instance based on the third request information, the network management service provider entity sends the third response information to the network management service consumer entity. The third response information indicates whether the network management service provider entity has modified the second network twin instance based on the third request information.

If the third response information indicates that the second network twin instance has not been modified based on the third request information, the third response information may further include a failure reason. After receiving the third response information, the network management service consumer entity may learn of a reason why the network management service provider entity has not completed modification of the second network twin instance. The network management service consumer entity may indicate the network management service provider entity to delete the second network twin instance and the like.

If the third response information indicates that the second network twin instance has been modified based on the third request information, the network management service provider entity may perform a new operation on the second network twin instance obtained through the modification, and return an execution result to the network management service consumer entity.

S411: When the end time arrives, the network management service provider entity ends use of the second network twin instance, and deletes the second network twin instance; or deletes the second network twin instance based on fourth request information.

For specific implementation of the step, refer to step S208 in the embodiment shown in FIG. 6 or step S308 in the embodiment shown in FIG. 7. Details are not described herein again.

According to the network twin instance management method provided in this embodiment of this application, the second network twin instance is created in the network management service provider entity, and a capability of modifying the second network twin instance is provided for the network management service consumer entity, to allow the network management service consumer entity to modify the second network twin instance, for performing a next operation. This decreases a quantity of to-be-created network twin instances, reduces a resource waste, and improves task execution efficiency.

In the foregoing embodiments, it is described that the network twin instance is created for the physical network based on a request of the network management service consumer entity. However, the network management service provider entity may alternatively determine whether to create the network twin instance for the physical network.

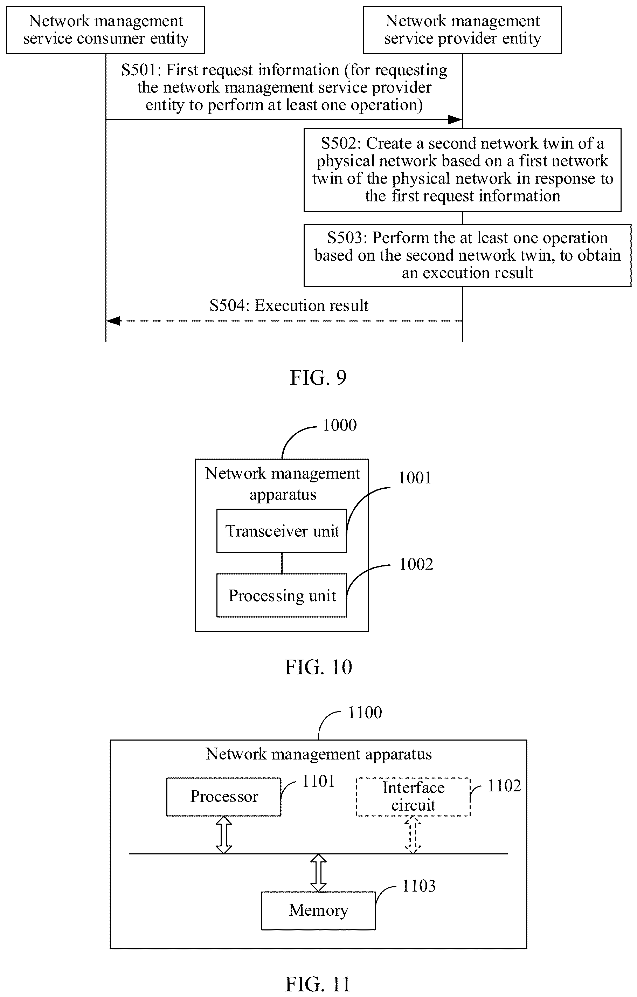

FIG. 9 is a schematic flowchart of still another network twin instance management method according to an embodiment of this application. For example, the method may include the following steps.

S501: A network management service consumer entity sends first request information to a network management service provider entity.

Accordingly, the network management service provider entity receives the first request information.

When the network management service consumer entity needs the network management service provider entity to simulate behavior of a physical network, and requests the network management service provider entity to perform one or more operations, the network management service consumer entity may send the first request information to the network management service provider entity. The first request information is for requesting the network management service entity to perform at least one of the following operations: pre-verifying a management policy of the physical network based on a second network twin instance, predicting performance of the physical network based on the second network twin instance, and managing a fault of the physical network based on the second network twin instance.

Pre-verifying the management policy of the physical network based on the second network twin instance may be, for example, performing fact reproduction. The fact reproduction is reproduction of an event that actually has occurred in the physical network. For example, the event that actually has occurred may be reproduced in a simulation system, and causality of occurrence of the event is deduced based on an observed appearance and a system running mechanism. A simulated object may be consistent with actual existence in reality, and all related events have indeed occurred in the past.

Pre-verifying the management policy of the physical network based on the second network twin instance may alternatively be, for example, performing solution verification. The solution verification means predicting a manifestation that is of the physical network and that is obtained through reconstruction based on a solution, to assess whether an expectation is satisfied. For example, accumulated experience or a summarized rule in a past similar scenario may be migrated to a design solution, to predict whether a manifestation of the design solution satisfies an expectation, or whether a reconstruction or optimization solution is superior to an existing solution may be compared. A simulated object may not exist at all, not exist partially, or have an inconsistent configuration in reality.

Pre-verifying the management policy of the physical network based on the second network twin instance may alternatively be, for example, performing survival checking. The survival checking is checking risk tolerance of the physical network into which the fault or an extreme case is introduced. For example, by randomly assuming some faults or extreme cases, whether a system has sufficient robustness to continue to run when the faults occur may be checked. A simulated object may be consistent or inconsistent with actual existence in reality.

Predicting the performance of the physical network based on the second network twin instance may be, for example, performing future prediction. The future prediction is predicting a future change trend of the physical network. For example, a change trend of a simulated object in a period of time in the future may be provided based on a current status and a running rule of the simulated object and with reference to prediction of an input or an environment. The simulated object may be consistent with existence in reality, and a related event has not occurred.

S502: The network management service provider entity creates the second network twin instance of the physical network based on a first network twin instance of the physical network in response to the first request information.

After receiving the first request information from the network management service consumer entity, the network management service provider entity may determine, based on a status of an internal network twin instance, whether to create a new network twin instance.

In this embodiment, it is assumed that the network management service provider entity includes the first network twin instance that has been created. The first network twin instance includes a digital representation of the physical network, and is for simulating the physical network, to implement synchronous analysis, prediction, improvement, optimization, and the like of the physical network. However, when the network management service consumer entity needs to use a network twin technology for the at least one operation, the network management service provider entity may create the second network twin instance of the physical network based on the first request information after receiving the first request information from the network management service consumer entity, to avoid affecting synchronization between the first network twin instance and the physical network or avoid affecting performing of a corresponding operation by using the first network twin instance.

The second network twin instance may be considered as a branch, a replica, a backup, or the like of the first network twin instance. Accordingly, the first network twin instance may also be referred to as a primary branch, a source, or the like.

In an example, the first network twin instance may be synchronized with the physical network in real time.

In another example, the first network twin instance may alternatively be a branch of a network twin instance (for example, a third network twin instance). That is, the second network twin instance is the branch of the branch of the third network twin instance.

For example, that the network management service provider entity creates the second network twin instance of the physical network based on the first network twin instance of the physical network may be that the network management service provider entity creates the second network twin instance based on data replicated from the first network twin instance.

For example, that the network management service provider entity creates the second network twin instance based on the data replicated from the first network twin instance may be pulling/replicating all data (which is also referred to as digital representations) of the network twin instance from the first network twin instance, to create the second network twin instance that is completely consistent with the first network twin instance. That is, the second network twin instance includes all the data of the first network twin instance, and is a replica of the first network twin instance. Alternatively, that the network management service provider entity creates the second network twin instance based on the data replicated from the first network twin instance may be that a network twin instance management module pulls/replicates a part of data of the first network twin instance from the first network twin instance, to create the second network twin instance having a simulation environment corresponding to a simulation operation. That is, the second network twin instance includes the part of data of the first network twin instance, and is a replica of data of an operation performing environment of the first network twin instance.

Because the first network twin instance is synchronized with the physical network, the initially created second network twin instance is also synchronized with the physical network. That is, both the first network twin instance and the second network twin instance are digital representations of a same physical network, and are for simulating the same physical network.

It may be understood that the network management service provider entity may receive a plurality of pieces of first request information sent by the network management service provider entity, and create a plurality of second network twin instances; or the network management service provider entity may receive one piece of first request information sent by the network management service provider entity, and create a plurality of second network twin instances.

S503: The network management service provider entity performs the at least one operation based on the second network twin instance, to obtain an execution result.

Because the network management service provider entity synchronizes data from the first network twin instance to the second network twin instance based on an update frequency in a period in which the second network twin instance is not used, the second network twin instance is synchronized with the physical network before the first request information is executed. To avoid affecting the synchronization between the first network twin instance and the physical network, after receiving the first request information, the network management service provider entity may perform the at least one operation based on the newly created second network twin instance and the first request information, to obtain the execution result, without performing the at least one operation based on the first network twin instance, to avoid affecting the synchronization between the first network twin instance and the physical network.

Further, the method may further include the following step (represented by a dashed line in the figure).

S504: The network management service provider entity sends the execution result to the network management service consumer entity.

After receiving the first request information, the network management service provider entity performs the at least one operation based on the second network twin instance, to obtain the execution result. Then, the network management service provider entity sends the execution result to the network management service consumer entity. The execution result is obtained by the network management service provider entity by performing the at least one operation based on the second network twin instance. For example, if the operation is pre-verifying the management policy of the physical network based on the second network twin instance, the execution result is a pre-verification result. For another example, if the operation is predicting the performance of the physical network based on the second network twin instance, the execution result is a prediction structure. For another example, if the operation is managing the fault of the physical network based on the second network twin instance, the execution result is a management result.

According to the network twin instance management method provided in this embodiment of this application, when the network management service provider entity receives a request for requesting to perform the at least one operation, the network management service provider entity may create the second network twin instance of the physical network based on the first request information after receiving the first request information from the network management service consumer entity, and perform the at least one operation based on the newly created second network twin instance, to avoid affecting the synchronization between the first network twin instance and the physical network or avoid affecting performing of the corresponding operation by using the first network twin instance, so that a network twin instances using manner is changed, and execution efficiency is improved.

It may be understood that, in the foregoing embodiments, the method and/or the step implemented by the network management service provider entity may alternatively be implemented by a component (for example, a chip or a circuit) that may be used in the network management service provider entity, and the method and/or the step implemented by the network management service consumer entity may alternatively be implemented by a component (for example, a chip or a circuit) that may be used in the network management service consumer entity.

The foregoing mainly describes, from a perspective of interaction between the network elements, the solutions provided in embodiments of this application. Accordingly, embodiments of this application further provides a network management apparatus. The network management apparatus is configured to implement the foregoing methods. The network management apparatus may be the network management service provider entity in the foregoing method embodiments, or may be a component that may be used in the network management service provider entity. Alternatively, the network management apparatus may be the network management service consumer entity in the foregoing method embodiments, or may be a component that may be used in the network management service consumer entity. It may be understood that, to implement the foregoing functions, the network management apparatus includes a corresponding hardware structure and/or software module for performing the functions. Persons skilled in the art should be easily aware that, with reference to units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. Persons skilled in the art may use different methods to implement the described functions for each particular application, but it should not be considered that the implementation goes beyond the scope of this application.

In embodiments of this application, division into functional modules may be performed on the network management apparatus based on the foregoing method embodiments. For example, division into functional modules may be performed based on corresponding functions, or two or more functions may be integrated into one processing unit. The integrated module may be implemented in a form of hardware, or may be implemented in a form of a software functional module. It should be noted that, in embodiments of this application, the division into the modules is an example, and is merely logical function division. In actual implementation, another division manner may be used.

Based on a same concept as the foregoing network twin instance management method, this application further provides the following network management apparatuses.

FIG. 10 is a diagram of a structure of a network management apparatus according to an embodiment of this application. The network management apparatus 1000 includes a transceiver unit 1001 and a processing unit 1002.

When the network management apparatus is configured to implement a function of the network management service provider entity in the foregoing method embodiments, the transceiver unit 1001 is configured to perform the operations of the network management service provider entity in S101 and S103 in the embodiment shown in FIG. 4, and the processing unit 1002 is configured to perform the operations in S102 and S104 in the embodiment shown in FIG. 4; the transceiver unit 1001 is configured to perform the operations of the network management service provider entity in S201, S203, S205, and S207 in the embodiment shown in FIG. 6, and the processing unit 1002 is configured to perform the operations in S202, S204, S206, and S208 in the embodiment shown in FIG. 6; the transceiver unit 1001 is configured to perform the operations of the network management service provider entity in S301, S303, S305, and S307 in the embodiment shown in FIG. 7, and the processing unit 1002 is configured to perform the operations in S302, S304, S306, and S308 in the embodiment shown in FIG. 7; the transceiver unit 1001 is configured to perform the operations of the network management service provider entity in S401, S403, S405, S407, S408 and S410 in the embodiment shown in FIG. 8, and the processing unit 1002 is configured to perform the operations in S402, S404, S406, S409, and S411 in the embodiment shown in FIG. 8; or the transceiver unit 1001 is configured to perform the operations of the network management service provider entity in S501 and S503 in the embodiment shown in FIG. 9, and the processing unit 1002 is configured to perform the operation in S502 in the embodiment shown in FIG. 9.

When the network management apparatus is configured to implement a function of the network management service consumer entity in the foregoing method embodiments, the transceiver unit 1001 is configured to perform the operations of the network management service consumer entity in S101 and S103 in the embodiment shown in FIG. 4, the transceiver unit 1001 is configured to perform the operations of the network management service consumer entity in S201, S203, S205, and S207 in the embodiment shown in FIG. 6, the transceiver unit 1001 is configured to perform the operations of the network management service consumer entity in S301, S303, S305, and S307 in the embodiment shown in FIG. 7, the transceiver unit 1001 is configured to perform the operations of the network management service consumer entity in S401, S403, S405, S407, S408, and S410 in the embodiment shown in FIG. 8, or the transceiver unit 1001 is configured to perform the operations of the network management service consumer entity in S501 and S503 in the embodiment shown in FIG. 9.

FIG. 11 is a diagram of a structure of another network management apparatus according to an embodiment of this application. The network management apparatus 1100 includes a processor 1101 and a memory 1103. The memory 1103 is configured to: store instructions executed by the processor 1101, store input data needed by the processor 1101 to run instructions, or store data generated by running instructions by the processor 1101. Optionally, the network management apparatus 1100 may further include an interface circuit 1102 (represented by a dashed line in the figure), and the processor 1101 and the interface circuit 1102 are coupled to each other. It may be understood that, the interface circuit 1102 may be a transceiver or an input/output interface. The processor 1101 is configured to implement a function of the processing unit 1002 in the embodiment shown in FIG. 10, and the interface circuit 1102 is configured to implement a function of the transceiver unit 1001 in the embodiment shown in FIG. 10.

When the network management apparatus is a chip used in a network management service provider entity, the chip implements a function of the network management service provider entity in the foregoing method embodiments. The chip receives information from another module (for example, a radio frequency module or an antenna) in the network management service provider entity, where the information is sent by a network management service consumer entity to the network management service provider entity; or the chip sends information to another module (for example, a radio frequency module or an antenna) in the network management service provider entity, where the information is sent by the network management service provider entity to a network management service consumer entity.

When the network management apparatus is a chip used in a network management service consumer entity, the chip implements a function of the network management service consumer entity in the foregoing method embodiments. The chip receives information from another module (for example, a radio frequency module or an antenna) in the network management service consumer entity, where the information is sent by a network management service provider entity to the network management service consumer entity; or the chip sends information to another module (for example, a radio frequency module or an antenna) in the network management service consumer entity, where the information is sent by the network management service consumer entity to a network management service provider entity.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

Division into the modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is enabled to perform the methods in the foregoing embodiments.

An embodiment of this application further provides a network management system, including the foregoing network management apparatus.

An embodiment of this application further provides a circuit. The circuit is coupled to a memory, and the circuit is configured to perform the methods shown in the foregoing embodiments. The circuit may include a chip circuit.

It should be noted that one or more of the foregoing units or units may be implemented by software, hardware, or a combination of software and hardware. When any one of the foregoing units or units is implemented by software, the software exists in a form of computer program instructions, and is stored in the memory. The processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, the steps, and the logical block diagrams that are disclosed in this application. The general-purpose processor may be a microprocessor, any conventional processor, or the like. The steps in the methods disclosed with reference to this application may be directly performed and completed by a hardware processor, or may be performed and completed by using a combination of hardware in the processor and a software module.

The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a special-purpose logic operation.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and may run necessary software or does not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include a chip and another discrete device. This is not specifically limited in embodiments of this application.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be for carrying or storing expected program code in a form of instructions or a data structure and that can be accessed by a computer, but is not limited thereto. The memory in this application may alternatively be a circuit or any other apparatus that can implement a storage function, and is configured to store program instructions and/or data.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following" or a similar expression thereof means any combination of these items, including a single item or any combination of plural items. For example, at least one of a, b, or c may indicate: a, b, c, a and b, a and c, b and c, or a, b, and c, where a, b, and c may be singular or plural. In addition, in embodiments of this application, terms such as "first" and "second" are used to distinguish between same objects or similar objects whose functions and purposes are basically the same, to clearly describe the technical solutions in embodiments of this application. Persons skilled in the art may understand that the terms such as "first" and "second" do not limit a quantity or an execution sequence, and the terms such as "first" and "second" do not indicate a definite difference. In addition, in embodiments of this application, a term like "example" or "for example" is for representing giving an example, an illustration, or a description. Any embodiment or design solution described as "example" or "for example" in embodiments of this application should not be explained as being more preferred or having more advantages than another embodiment or design solution. Exactly, use of the term like "example" or "for example" is intended to present a related concept in a specific manner for ease of understanding.

All or some of the foregoing embodiments may be implemented by using software, hardware, firmware, or any combination thereof. When a software program is used to implement the methods, all or some of the methods may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments herein, in a process of implementing this application that claims protection, persons skilled in the art may understand and implement another variation of the disclosed embodiments by viewing the accompanying drawings, disclosed content, and appended claims. In the claims, "comprising" (comprising) does not exclude another component or step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not for limiting the scope of embodiments of this application. Sequential numbers of the foregoing processes do not mean execution sequences. The execution sequences of the processes should be determined based on functions and internal logic of the processes.

In the foregoing embodiments, the descriptions of each embodiment have respective focuses. For a part that is not described in detail in an embodiment, reference may be made to related descriptions in other embodiments.

Components in the apparatus in embodiments of this application may be combined, divided, and deleted based on an actual requirement. Persons skilled in the art may combine different embodiments or features of different embodiments described in this specification.

The foregoing embodiments are merely for describing the technical solutions in this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. However, these modifications or replacements do not cause the essence of the corresponding technical solutions to depart from the scope of the technical solutions in embodiments of this application.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that persons skilled in the art may make various modifications and variations to this application without departing from the scope of this application. In this case, this application is intended to cover these modifications and variations of this application provided that they fall within the scope of the claims of this application and equivalent technologies thereof.

## Claims

1. A network twin instance management method, wherein the method comprises:
receiving, by a network management service provider entity, first request information from a network management service consumer entity, wherein the first request information is for requesting the network management service provider entity to create a network twin instance; and
creating, by the network management service provider entity, a second network twin instance of a physical network based on a first network twin instance of the physical network in response to the first request information, and sending an identifier of the second network twin instance to the network management service consumer entity.

2. The method according to claim 1, wherein the method further comprises: keeping, by the network management service provider entity, the first network twin instance synchronized with the physical network.

3. The method according to claim 1 or 2, wherein the method further comprises:
receiving, by the network management service provider entity, second request information from the network management service consumer entity, wherein the second request information is for requesting the network management service provider entity to perform at least one of the following operations: verification, prediction, and fault management, wherein the verification is for verifying a management policy of the physical network, the prediction is for predicting performance of the physical network, and the fault management is for managing a fault of the physical network.

4. The method according to claim 1 or 2, wherein the method further comprises:
receiving, by the network management service provider entity, second request information from the network management service consumer entity, wherein the second request information comprises the identifier of the second network twin, and the second request information is for requesting the network management service provider entity to perform at least one of the following operations: pre-verifying a management policy of the physical network based on the second network twin, predicting performance of the physical network based on the second network twin, and managing a fault of the physical network based on the second network twin.

5. The method according to any one of claims 1 to 4, wherein the first request information comprises at least one of the following: an update frequency, start time, and end time, wherein
the update frequency is a time interval between two consecutive data synchronization operations, and the data synchronization operation is synchronizing data from the first network twin instance to the second network twin instance;
the start time is a time point at which use of the second network twin instance is started; and
the end time is a time point at which the use of the second network twin instance is ended.

6. The method according to any one of claims 1 to 5, wherein the first request information comprises indication information indicating the network management service provider entity to create the new network twin instance based on an existing network twin instance of the physical network.

7. The method according to any one of claims 1 to 6, wherein the first request information further comprises an identifier of the first network twin instance.

8. The method according to any one of claims 1 to 7, wherein creating, by the network management service provider entity, the second network twin instance of the physical network based on the first network twin instance of the physical network comprises:
creating, by the network management service provider entity, the second network twin instance based on data replicated from the first network twin instance.

9. The method according to claim 8, wherein the first request information further comprises replication requirement information, and the replication requirement information indicates the data to be replicated from the first network twin instance.

10. The method according to claim 9, wherein the replication requirement information comprises at least one of the following: a network filter condition, environment information, traffic information, and a time point, wherein the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in the second network twin instance, and the time point indicates that data corresponding to a part or all of digital representations that are in the physical network and that are at the time point is required to be replicated from the first network twin instance.

11. The method according to claim 10, wherein the network filter condition comprises at least one of the following:
a network element identifier, indicating that data corresponding to a digital representation that is in the physical network and that is of a network element identified by the network element identifier is required to be replicated from the first network twin instance;
a network element type, indicating that data corresponding to digital representations that are in the physical network and that are of all network elements that belong to the network element type is required to be replicated from the first network twin instance;
a networking manner, indicating that data corresponding to digital representations that are in the physical network and that are of all network elements that belong to the networking manner is required to be replicated from the first network twin instance;
a base station standard, indicating that data corresponding to digital representations that are in the physical network and that are of all cells that belong to a base station whose standard is the base station standard is required to be replicated from the first network twin instance; and
a network area, indicating that data corresponding to digital representations that are in the physical network and that are of all network elements in the network area is required to be replicated from the first network twin instance.

12. The method according to claim 10 or 11, wherein the environment information comprises at least one of the following: a geographical area and a subnet identifier, wherein the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

13. The method according to any one of claims 5 to 12, wherein the method further comprises:
receiving, by the network management service provider entity, third request information from the network management service consumer entity, wherein the third request information is for requesting to modify the second network twin instance, the third request information comprises the identifier of the second network twin instance and a to-be-modified object, the to-be-modified object comprises at least one of the following: the update frequency, the start time, the end time, and modification requirement information, and the modification requirement information indicates data of the second network twin instance required to be modified; and
sending, by the network management service provider entity, third response information to the network management service consumer entity, wherein the third response information indicates that the network management service provider entity has modified the second network twin instance based on the third request information.

14. The method according to any one of claims 1 to 13, wherein the method further comprises:
receiving, by the network management service provider entity, fourth request information from the network management service consumer entity, wherein the fourth request information comprises the identifier of the second network twin instance, and the fourth request information is for requesting to delete the second network twin instance.

15. A network twin instance management method, wherein the method comprises:
sending, by a network management service consumer entity, first request information to a network management service provider entity, wherein the first request information is for requesting the network management service provider entity to create a network twin instance; and
receiving, by the network management service consumer entity, an identifier of a second network twin instance from the network management service provider entity.

16. The method according to claim 15, wherein the method further comprises:
sending, by the network management service consumer entity, second request information to the network management service provider entity, wherein the second request information is for requesting the network management service provider entity to perform at least one of the following operations: verification, prediction, and fault management, wherein the verification is for verifying a management policy of the physical network, the prediction is for predicting performance of the physical network, and the fault management is for managing a fault of the physical network.

17. The method according to claim 15, wherein the method further comprises:
sending, by the network management service consumer entity, second request information to the network management service provider entity, wherein the second request information comprises the identifier of the second network twin, and the second request information is for requesting the network management service provider entity to perform at least one of the following operations: pre-verifying a management policy of the physical network based on the second network twin, predicting performance of the physical network based on the second network twin, and managing a fault of the physical network based on the second network twin.

18. The method according to any one of claims 15 to 17, wherein the first request information comprises at least one of the following: an update frequency, start time, and end time, wherein
the update frequency is a time interval between two consecutive data synchronization operations, and the data synchronization operation is synchronizing data from the first network twin instance to the second network twin instance;
the start time is a time point at which use of the second network twin instance is started; and
the end time is a time point at which the use of the second network twin instance is ended.

19. The method according to any one of claims 15 to 18, wherein the first request information comprises indication information indicating the network management service provider entity to create the new network twin instance based on an existing network twin instance of the physical network.

20. The method according to any one of claims 15 to 19, wherein the first request information further comprises an identifier of the first network twin instance.

21. The method according to any one of claims 15 to 20, wherein the first request information further comprises replication requirement information, and the replication requirement information indicates data to be replicated from the first network twin instance.

22. The method according to claim 21, wherein the replication requirement information comprises at least one of the following: a network filter condition, environment information, traffic information, and a time point, wherein the network filter condition indicates that data corresponding to a digital representation that is in the physical network and that is of a network element obtained through filtering based on the network filter condition is required to be replicated from the first network twin instance, the environment information indicates that data corresponding to a digital representation that is in the physical network and that corresponds to the environment information is required to be replicated from the first network twin instance, the traffic information indicates whether traffic information needs to be simulated in the second network twin instance, and the time point indicates that data corresponding to a part or all of digital representations that are in the physical network and that are at the time point is required to be replicated from the first network twin instance.

23. The method according to claim 22, wherein the network filter condition comprises at least one of the following:
a network element identifier, indicating that data corresponding to a digital representation that is in the physical network and that is of a network element identified by the network element identifier is required to be replicated from the first network twin instance;
a network element type, indicating that data corresponding to digital representations that are in the physical network and that are of all network elements that belong to the network element type is required to be replicated from the first network twin instance;
a networking manner, indicating that data corresponding to digital representations that are in the physical network and that are of all network elements that belong to the networking manner is required to be replicated from the first network twin instance;
a base station standard, indicating that data corresponding to digital representations that are in the physical network and that are of all cells that belong to a base station whose standard is the base station standard is required to be replicated from the first network twin instance; and
a network area, indicating that data corresponding to digital representations that are in the physical network and that are of all network elements in the network area is required to be replicated from the first network twin instance.

24. The method according to claim 22 or 23, wherein the environment information comprises at least one of the following: a geographical area and a subnet identifier, wherein the geographical area indicates that data corresponding to digital representations that are in the physical network and that are of all network elements in the geographical area is required to be replicated from the first network twin instance, and the subnet identifier indicates that data corresponding to digital representations of all network elements in a subnet identified by the subnet identifier is required to be replicated from the first network twin instance.

25. The method according to any one of claims 18 to 24, wherein the method further comprises:
sending, by the network management service consumer entity, third request information to the network management service provider entity, wherein the third request information is for requesting to modify the second network twin instance, the third request information comprises the identifier of the second network twin instance and a to-be-modified object, the to-be-modified object comprises at least one of the following: the update frequency, the start time, the end time, and second data requirement information, and the second data requirement information indicates data of the second network twin instance required to be modified when the second network twin instance is modified based on the first network twin instance; and
receiving, by the network management service consumer entity, third response information from the network management service provider entity, wherein the third response information indicates that the second network twin instance has been modified.

26. The method according to any one of claims 15 to 25, wherein the method further comprises:
sending, by the network management service consumer entity, fourth request information to the network management service provider entity, wherein the fourth request information comprises the identifier of the second network twin instance, and the fourth request information is for requesting to delete the second network twin instance.

27. A network twin instance management method, wherein the method comprises:
sending, by a network management service consumer entity, first request information to a network management service provider entity, wherein the first request information is for requesting the network management service provider entity to create a network twin instance; and
creating, by the network management service provider entity, a second network twin instance of a physical network based on a first network twin instance of the physical network in response to the first request information, and sending an identifier of the second network twin instance to the network management service consumer entity.

28. The method according to claim 27, wherein the method further comprises:
sending, by the network management service consumer entity, second request information to the network management service provider entity, wherein the second request information is for requesting the network management service provider entity to perform at least one of the following operations: verification, prediction, and fault management, wherein the verification is for verifying a management policy of the physical network, the prediction is for predicting performance of the physical network, and the fault management is for managing a fault of the physical network.

29. The method according to claim 27, wherein the method further comprises:
sending, by the network management service consumer entity, second request information to the network management service provider entity, wherein the second request information comprises the identifier of the second network twin, and the second request information is for requesting the network management service provider entity to perform at least one of the following operations: pre-verifying a management policy of the physical network based on the second network twin, predicting performance of the physical network based on the second network twin, and managing a fault of the physical network based on the second network twin.

30. The method according to any one of claims 27 to 29, wherein the first request information comprises at least one of the following information: an update frequency, start time, and end time, wherein
the update frequency is a time interval between two consecutive data synchronization operations, and the data synchronization operation is synchronizing data from the first network twin instance to the second network twin instance;
the start time is a time point at which use of the second network twin instance is started; and
the end time is a time point at which the use of the second network twin instance is ended.

31. The method according to any one of claims 27 to 30, wherein the first request information further comprises replication requirement information, and the replication requirement information indicates data to be replicated from the first network twin instance.

32. A network management apparatus, wherein the apparatus comprises a module configured to implement the method according to any one of claims 1 to 14, or comprises a module configured to implement the method according to any one of claims 15 to 26.

33. A network management apparatus, comprising a processor, a memory, and instructions that are stored in the memory and that are run on the processor, wherein when the instructions are run, the network management apparatus is enabled to perform the method according to any one of claims 1 to 14 or perform the method according to any one of claims 15 to 26.

34. A network management system, comprising a network management service provider entity and a network management service consumer entity, wherein the network management service provider entity comprises a module configured to perform the method according to any one of claims 1 to 14, and the network management service consumer entity comprises a module configured to implement the method according to any one of claims 15 to 26.

35. A computer-readable storage medium, wherein the computer-readable storage medium comprises instructions; and when the instructions are run by a processor, the method according to any one of claims 1 to 26 is enabled to be implemented.
